# EUROPÄISCHE PATENTSCHRIFT

(11) **EP 3 499 055 B1**
(45) Veröffentlichungstag und Bekanntmachung des Hinweises auf die Patenterteilung: **13.05.2020**
(21) Anmeldenummer: 18209432.6
(22) Anmeldetag: 30.11.2018
(51) Int. Cl.: F16B 19/02

(54) **UNSYMMETRISCHER ARRETIERBOLZEN MIT UNTERSCHIEDLICHEN DREHPOSITIONEN**
ASYMMETRICAL LOCKING BOLT WITH DIFFERENT ROTATING POSITIONS
BOULON D'ARRÊT NON SYMÉTRIQUE DANS DIFFÉRENTES POSITIONS DE ROTATION

(30) Priorität: 14.12.2017 DE 102017222766
(43) Veröffentlichungstag der Anmeldung: 19.06.2019
(73) Patentinhaber: Kipp Verpachtungen e.K., 72172 Sulz a.N. (DE)
(72) Erfinder: Haug, André, 72296 Schopfloch-Oberiflingen (DE)
(74) Vertreter: Kohler Schmid Möbus Patentanwälte

(56) Entgegenhaltungen:
- EP-A2- 1 236 910
- GB-A- 233 625
- GB-A- 191 105 465
- US-A- 4 602 890

## Beschreibung

Die Erfindung betrifft einen Arretierbolzen umfassend ein Hülsenteil und einen Arretierstift, wobei in einem Betriebszustand des Arretierbolzens der Arretierstift entlang einer Längsachse zwischen einer maximal ausgerückten Stellung, die durch einen ersten Anschlag definiert ist, und einer maximal eingerückten Stellung, die durch einen zweiten Anschlag definiert ist, gegenüber dem Hülsenteil verschieblich ist, und wobei eine erste Führungseinrichtung vorgesehen ist, die eine Ausrichtung des Arretierstifts in wenigstens zwei unterschiedlichen Drehpositionen bezüglich der Längsachse relativ zu dem Hülsenteil ermöglicht.

Ein solcher Arretierbolzen ist aus der DE 295 19 311 U1 bekannt geworden. Ein weiterer Arretierbolzen ist aus der US 4,602,890 bekannt.

Arretierbolzen, die auch Rastbolzen genannt werden, dienen zum Fixieren zweier Bauteile relativ zueinander. Oft können mittels eines Arretierbolzens mehrere unterschiedliche Positionen der beiden Bauteile relativ zueinander fixiert werden. Arretierbolzen/Rastbolzen finden beispielsweise in Schwenkvorrichtungen oder Drehvorrichtungen sowie bei der Anschlagpositionierung Anwendung.

Typischerweise wird ein Hülsenteil des Arretierbolzens an einem ersten Bauteil festgelegt. Ein entlang einer Längsachse verschieblicher Arretierstift kann in einer ausgerückten Stellung mit seinem freien Ende in eine Öffnung des zweiten Bauteils eingreifen bzw. das zweite Bauteil hintergreifen. Zum Verändern der Relativposition der beiden Bauteile zueinander kann der Arretierstift entlang der Längsachse gegen die Wirkung einer Feder in das Hülsenteil eingerückt werden, um außer Eingriff mit dem zweiten Bauteil gebracht zu werden. Anschließend kann das zweite Bauteil neu ausgerichtet oder ein anderes zweites Bauteil relativ zu dem ersten Bauteil positioniert werden und durch Ausrücken des Arretierstifts fixiert werden.

Aus dem Datenblatt "K0338 Arretierbolzen", abgerufen von https://www.kippwerk.de/de/de/Produkte/Bedienteile-Normelemente/Federnde-Druckst%C3%BCcke-Arretierbolzen-Kugelsperrbolzen/K0338-K0338-Arretierbolzen-rot.html am 09.10.2017, sind als Form C bzw. Form D bezeichnete Arretierbolzen bekannt, bei denen eine eingerückte Stellung des Arretierstifts durch Drehen eines an dem Arretierstift befestigten Griffs gesichert werden kann. Der Griff weist zwei axiale Vorsprünge auf, die in der ausgerückten Stellung in korrespondierende Nuten eines Hülsenteils des Arretierbolzens eingreifen. Nach Einrücken des Arretierstifts mittels des Griffs und Drehen des Griffs um ca. 90° stützen sich die axialen Vorsprünge des Griffs an einer Stirnseite des Hülsenteils ab, so dass der Arretierstift in der eingerückten Stellung verbleibt. Die beiden mittels des Arretierbolzens zu fixierenden Bauteile können dann relativ zueinander (neu) ausgerichtet werden. Um die Bauteile zu fixieren, wird der Griff wieder um ca. 90° gedreht, so dass die Vorsprünge in die Nuten des Hülsenteils eingeführt werden können, wobei der Arretierstift in die ausgerückte Stellung vorgeschoben wird. In der eingerückten Stellung kann der Arretierstift mittels des Griffs frei um seine Längsachse gedreht werden; durch die Nuten und Vorsprünge ist ein Ausrücken des Arretierstifts in zwei bezüglich der Längsachse um 180° gedrehten Positionen möglich. Das freie Ende des Arretierstifts ist rotationssymmetrisch ausgebildet.

Die eingangs erwähnte DE 295 19 311 U1 beschreibt einen Arretierbolzen zum Fixieren von Geräteteilen, bei dem eine ausgerastete (eingerückte) Stellung eines Indexstifts selbsttätig gehalten wird. Der Indexstift dieses Arretierbolzens ist unlösbar mit einem Handgriff verbunden. Der Handgriff weist einen ersten Innensechskant und einen zu diesem um 30° bezüglich einer Längsachse gedrehten zweiten Innensechskant auf, wobei der zweite Innensechskant deutlich weniger tief als der erste Innensechskant ausgebildet ist. Um den Indexstift in eine eingerastete (ausgerückte) Stellung zu verbringen, wird der erste Innensechskant des Handgriffs in einer von sechs möglichen Drehpositionen passend zu einem Außensechskant einer Gewindebuchse des Arretierbolzens ausgerichtet. Der Handgriff und der Indexstift werden sodann von einer Druckfeder in die ausgerückte Stellung gedrückt. Um die ausgerastete Stellung zu sichern, wird der Indexstift zunächst mittels des Handgriffs weit zurückgezogen und um 30° gedreht. In dieser gedrehten Stellung wird der Handgriff mit dem Indexstift von der Druckfeder gegen den Außensechskant der Gewindebuchse gedrückt, so dass der zweite Innensechskant des Handgriffs an dem Außensechskant zur Anlage kommt und die ausgerastete Stellung sichert. In der weit zurückgezogenen Stellung sind der Handgriff und der Indexstift frei gegenüber der Gewindebuchse drehbar. In der eingerasteten Stellung des Indexstifts kann die Gewindebuchse mittels des Handgriffs gedreht werden. Das freie Ende des Indexstifts ist rotationssymmetrisch ausgebildet.

### Aufgabe der Erfindung

Der Erfindung liegt die Aufgabe zugrunde, einen Arretierbolzen zu schaffen, der ein richtungsabhängiges Fixieren zweier Bauteile aneinander auf flexible Weise ermöglicht.

### Kurze Beschreibung der Erfindung

Diese Aufgabe wird gelöst durch einen Arretierbolzen der eingangs genannten Art, der eine bezüglich der Längsachse nicht rotationssymmetrische Spitze aufweist, dessen Arretierstift in einem Verstellzustand des Arretierbolzens in eine beliebige der unterschiedlichen Drehpositionen relativ zu dem Hülsenteil überführbar ist, und der dadurch gekennzeichnet ist,
- dass im Betriebszustand des Arretierbolzens die erste Führungseinrichtung eine eingestellte Drehposition des Arretierstifts relativ zu dem Hülsenteil unabhängig davon sichert, in welcher Axialposition zwischen der maximal ausgerückten Stellung und der maximal eingerückten Stellung sich der Arretierstift befindet.

Durch die nicht rotationssymmetrische Spitze wird gegenüber einer rotationssymmetrischen Spitze die Möglichkeit geschaffen, die Fixierung eines zweiten Bauteils, in das die Spitze eingreift oder welches von der Spitze hintergriffen wird, an einem ersten Bauteil, an dem das Hülsenteil befestigt ist, richtungsabhängig zu gestalten. Beispielsweise kann ein Eingriff nur in einer bestimmten rotatorischen Ausrichtung des zweiten Bauteil bezüglich der Längsachse möglich sein. Die nicht rotationssymmetrische Spitze kann auch ein Einrasten oder Ausrasten des Arretierstifts in das bzw. aus dem zweiten Bauteil in bestimmten Richtungen quer zur Längsachse erleichtern; insbesondere kann in ausgewählten Richtungen ein selbsttätiges Ein- und/oder Ausrasten ermöglicht werden, wohingegen andere Richtungen gesperrt sind.

Um diese Wirkungen der nicht rotationssymmetrischen Spitze im Betrieb, insbesondere nach mehrmaliger manueller Betätigung des Arretierbolzens zu bewahren, ist die erste Führungseinrichtung vorgesehen, welche in dem Betriebszustand die eingestellte Drehposition des Arretierstifts relativ zu dem Hülsenteil sichert. Die erste Führungseinrichtung ist in dem Betriebszustand unabhängig davon wirksam, in welche Axialposition der Arretierstift verbracht ist. Insbesondere ist im Betriebszustand des Arretierbolzens die erste Führungseinrichtung auch wirksam, wenn der Arretierstift maximal eingezogen ist, d.h. in die maximal eingerückte Stellung verbracht ist, oder wenn der Arretierstift in die maximal ausgerückte Stellung verbracht ist. Im Betriebszustand ist die Verschieblichkeit des Arretierstifts durch den ersten und den zweiten Anschlag auf den Bereich zwischen der maximal ausgerückten und der maximal eingerückten Stellung begrenzt.

Damit die Ausrichtung der Spitze des Arretierstifts relativ zu dem ersten Bauteil, an dem das Hülsenteil für den Gebrauch des Arretierbolzens befestigt ist, flexibel eingestellt werden kann, ist es in dem Verstellzustand möglich, den Arretierstift in eine beliebige der unterschiedlichen Drehpositionen relativ zu dem Hülsenteil zu verbringen, d.h. um die Längsachse zu drehen. Mithin kann eingestellt werden, in welchen Richtungen die unterschiedlichen Fixiereigenschaften des Arretierbolzens wirken.

Im Verstellzustand kann die erste Führungseinrichtung außer Kraft gesetzt bzw. überwunden werden, um den Arretierstift in eine neue Drehposition relativ zu dem Hülsenteil zu überführen. Es ist somit möglich, die (rotatorische) Ausrichtung der nicht rotationssymmetrischen Spitze relativ zu dem ersten Bauteil weitgehend unabhängig von einer Drehstellung des Hülsenteils relativ zu dem ersten Bauteil zu beeinflussen. So kann beispielsweise, wenn eine bestimmte Einbaulage des Hülsenteils relativ zu dem ersten Bauteil vorgegeben ist, etwa durch eine bestimmte Einschraubtiefe, durch die unterschiedlichen möglichen Drehpositionen die Spitze im Verstellzustand in die gewünschte Ausrichtung relativ zu dem ersten Bauteil gedreht werden.

Das Hülsenteil weist vorzugsweise ein Gewinde auf, mit dem es in das erste Bauteil eingeschraubt werden kann. Die Möglichkeit, den Arretierstift in unterschiedliche Drehpositionen zu überführen, erlaubt dann eine feinere Einstellung einer Axialposition des Arretierstifts in der maximal ausgerückten Stellung relativ zu dem ersten Bauteil, wenn eine bestimmte rotatorische Ausrichtung des Arretierstifts relativ zu dem ersten Bauteil eingehalten werden muss. Ohne die Möglichkeit unterschiedliche Drehpositionen einstellen zu können, müsste das Hülsenteil für eine bestimmte rotatorische Ausrichtung der Spitze des Arretierstifts in ganzen Drehungen, d.h. jeweils um den Betrag der Gewindesteigung, weiter in das erste Bauteil hinein oder aus diesem heraus geschraubt werden. Durch die wenigstens zwei unterschiedlichen möglichen Drehpositionen wird für eine bestimmte rotatorische Ausrichtung der Spitze des Arretierstifts ein unterschiedlich tiefes Einschrauben des Hülsenteils in Schritten ermöglicht, die den unterschiedlichen Drehpositionen entsprechenden Bruchteilen ganzer Drehungen entsprechen. Damit ist ein entsprechend feineres Einstellen der Axialposition des Arretierstifts in der maximal ausgerückten Stellung relativ zu dem ersten Bauteil bei gleichbleibender rotatorischer Ausrichtung der Spitze möglich.

Nachdem in dem Verstellzustand der Arretierstift in die gewünschte Drehposition überführt wurde, wird der Arretierbolzen wieder in den Betriebszustand gebracht. Dann ist sichergestellt, dass die Drehposition des Arretierstifts im weiteren Betrieb, d.h. insbesondere bei Betätigung des Arretierbolzens, um das zweite Bauteil umzupositionieren oder ein anderes zweites Bauteil zu fixieren, erhalten bleibt. Ebenso wird durch die erste Führungseinrichtung verhindert, dass die eingestellte Drehposition durch die Einleitung von Kräften und/oder Momenten in den Arretierstift verändert wird.

Die erste Führungseinrichtung umfasst typischerweise zusammenwirkende Vielkantprofile an dem Arretierstift und an dem Hülsenteil, die im Verstellzustand außer Eingriff gebracht werden. Alternativ kann die erste Führungseinrichtung eine radiale Auskragung an dem Arretierstift oder an dem Hülsenteil umfassen, die im Betriebszustand mit einer von mehreren Nuten des anderen Bauteils in Eingriff steht, und die im Verstellzustand außer Eingriff gebracht werden.

Durch den ersten und den zweiten Anschlag wird im Betriebszustand ein Verfahrweg des Arretierstifts gegenüber dem Hülsenteil begrenzt. Im Verstellzustand ist typischerweise der mögliche Verfahrweg des Arretierstifts gegenüber dem Hülsenteil in zumindest einer Richtung entlang der Längsachse erweitert.

Typischerweise sind Zustandswechselmittel vorgesehen, die betätigt/manipuliert werden müssen, um zwischen dem Betriebszustand und dem Verstellzustand (und umgekehrt) zu wechseln. Im normalen Gebrauch (d.h. im Betriebszustand) werden die Zustandswechselmittel nicht betätigt/manipuliert. Die Zustandswechselmittel können einen Schraub- oder Klemmmechanismus umfassen.

Die erste Führungseinrichtung erlaubt ein Ausrichten des Arretierstifts in dem Hülsenteil in wenigstens zwei relativ zu dem Hülsenteil unterschiedlichen Drehpositionen bezüglich der Längsachse, insbesondere wenigstens drei, typischerweise wenigstens vier, vorzugsweise wenigstens sechs, besonders bevorzugt wenigstens acht und höchst bevorzugt wenigstens zwölf unterschiedlichen Drehpositionen. Innerhalb der ersten Führungseinrichtung ist ein gewisses Drehspiel zulässig, z.B. bis zu 15°, vorzugsweise höchstens 10°, besonders bevorzugt höchstens 5°. In einer ganz besonders vorteilhaften Ausführungsform ist die erste Führungseinrichtung spielfrei.

An einem Griffabschnitt zur Betätigung des Arretierstifts kann ein Hinweiselement vorgesehen sein, das eine Ausrichtung der nicht rotationssymmetrischen Spitze anzeigt, etwa in Form einer Farbmarke oder einer Einprägung bzw. Ausformung oder einer asymmetrischen Gestaltung des Griffabschnitts. Dadurch kann die Ausrichtung der Spitze erkannt werden, auch wenn diese beispielsweise durch ein erstes Bauteil, an dem der Arretierbolzen befestigt ist, verdeckt ist.

Die nicht rotationsymmetrische Spitze kann nicht durch Drehung um beliebige Winkel (<360°) um die Längsachse in sich selbst überführt werden. Typischerweise kann die nicht rotationssymmetrische Spitze auch nicht durch Drehung um Bruchteile einer vollen Drehung in sich selbst überführt werden, d.h. sie ist auch nicht drehsymmetrisch.

Die nicht rotationssymmetrische Spitze kann eine Vorzugsrichtung quer zu der Längsachse definieren. Die nicht rotationssymmetrische Spitze kann ein langgestrecktes Spitzenelement umfassen, das beispielsweise näherungsweise quaderförmig ausgebildet ist, wobei eine Abmessung des langgestreckten Spitzenelements in einer ersten Richtung quer zu der Längsachse wesentlich größer, insbesondere wenigstens doppelt so groß, sein kann wie eine Abmessung des langgestreckten Spitzenelements in einer zweiten quer zu der Längsachse und der ersten Richtung verlaufenden Richtung.

Der Arretierstift ist grundsätzlich in die maximal ausgerückte Stellung vorgespannt. In der maximal ausgerückten Stellung ragt die Spitze des Arretierstifts regelmäßig in axialer Richtung aus dem Hülsenteil heraus. In der maximal eingerückten Stellung ist die Spitze des Arretierstifts typischerweise vollständig in dem Hülsenteil aufgenommen. Meist ragt der Arretierstift an einem der Spitze abgewandten Ende aus dem Hülsenteil heraus.

Der Arretierbolzen umfasst im Allgemeinen einen Griff zum axialen Verschieben des Arretierstifts gegenüber dem Hülsenteil.

### Bevorzugte Ausführungsformen der Erfindung

Bevorzugt ist eine Ausführungsform des erfindungsgemäßen Arretierbolzens, die vorsieht, dass in dem Verstellzustand der Arretierstift über die maximal eingerückte oder die maximal ausgerückte Stellung des Betriebszustands hinaus gegenüber dem Hülsenteil in axialer Richtung verschoben werden kann. Mit anderen Worten wird im Verstellzustand ein möglicher Verfahrweg des Arretierstifts entlang der Längsachse gegenüber dem Hülsenteil erweitert, typischerweise jedoch nur in einer Richtung. Der erweiterte Verfahrweg erlaubt es, die erste Führungseinrichtung außer Kraft zu setzen. Im Verstellzustand kann die erste Führungseinrichtung insbesondere durch axiales Verschieben des Arretierstifts über die maximal eingerückte oder die maximal ausgerückte Stellung des Betriebszustands hinaus überwunden werden. Es kann dann auf einfache Weise eine andere Drehposition eingerichtet werden.

Eine vorteilhafte Ausführungsform ist dadurch gekennzeichnet, dass der Arretierbolzen einen Griff zum axialen Verschieben des Arretierstifts gegenüber dem Hülsenteil umfasst, dass in dem Betriebszustand der Arretierstift in einer Betriebsposition an dem Griff fixiert ist, und dass in dem Verstellzustand der Arretierstift in eine von der Betriebsposition verschiedene Verstellposition relativ zu dem Griff verbracht ist. Durch Verbringen des Griffs in die Betriebsposition bzw. die Verstellposition kann auf einfache Weise zwischen dem Betriebszustand und dem Verstellzustand des Arretierbolzens gewechselt werden. Typischerweise wird einer der Anschläge, vorzugsweise der erste Anschlag, über den Griff bewirkt, etwa durch eine Anlage des Griffs an einer Stirnseite eines griffseitigen Endbereichs des Hülsenteils. Wenn der Griff an dem ersten oder zweiten Anschlag mitwirkt, wird durch Verbringen des Griffs in die Verstellposition zugleich auf die Wirkung dieses Anschlags Einfluss genommen, insbesondere so dass die Verschieblichkeit des Arretierstifts nicht mehr durch diesen Anschlag begrenzt wird.

In einer besonders vorteilhaften Weiterbildung dieser Ausführungsform ist vorgesehen, dass in der Verstellposition der Arretierstift im Vergleich zur Betriebsposition entlang der Längsachse gegenüber dem Griff verschoben ist. Durch eine Längsverschiebung des Griffs kann direkt auf einen der in Längsrichtung wirkenden Anschläge eingewirkt werden.

In einer zu dieser Weiterbildung alternativen Ausgestaltung kann der Griff in der Verstellposition auch von dem Arretierstift gelöst und entfernt sein. In einer weiteren alternativen Ausgestaltung kann der Griff in der Verstellposition im Vergleich zur Betriebsposition radial zu der Längsachse gegenüber dem Arretierstift verschoben sein.

Eine bevorzugte Weiterbildung eines Arretierbolzens mit Griff ist dadurch gekennzeichnet, dass der Arretierbolzen ein Stellelement umfasst zum Verfahren des Arretierstifts zwischen der Verstellposition und der Betriebsposition. Das Stellelement erlaubt ein schnelles und präzises Wechseln zwischen der Betriebsposition und der Verstellposition, mithin auch zwischen dem Betriebszustand und dem Verstellzustand. Das Stellelement kann einen Exzentermechanismus umfassen.

In einer besonders vorteilhaften Weiterentwicklung ist vorgesehen, dass das Stellelement eine Schraube umfasst, die sich einerseits an dem Griff abstützt und die andererseits in den Arretierstift eingreift. Auf diese Weise kann das Stellelement konstruktiv einfach umgesetzt werden. Zudem erlaubt die Schraube ein sicheres Fixieren des Arretierstifts in der Betriebsposition an dem Griff.

Eine bevorzugte Weiterbildung eines Arretierbolzens mit Griff ist dadurch gekennzeichnet, dass eine Rasteinrichtung zwischen dem Hülsenteil und dem Griff vorgesehen ist, die unabhängig von der ersten Führungseinrichtung ein Verdrehen des Griffs gegenüber dem Hülsenteil um die Längsachse verhindert, wenn der erste Anschlag des Arretierbolzens wirkt. Dadurch wird das Verstellen der Drehposition für einen Bediener vereinfacht. Bei dieser Weiterbildung ist der Arretierstift typischerweise zumindest in dem Verstellzustand nicht um die Längsachse gegenüber dem Griff drehbar. Wenn der Arretierstift sich in der Verstellposition zu dem Griff befindet, wird durch die Rasteinrichtung ein unbeabsichtigtes Verstellen der Drehposition verhindert, solange der erste Anschlag wirksam ist. Erst nach Aufheben des ersten Anschlags, beispielsweise durch Anheben des Griffs, kann der Griff gegenüber dem Hülsenteil verdreht werden. Nach dem Verdrehen des Griffs und des Arretierstifts sichert die Rasteinrichtung die neu eingestellte Drehposition, wenn der erste Anschlag wieder wirkt, so dass der Arretierstift ohne die Gefahr eines unbeabsichtigten Verstellens seiner Drehposition wieder in der Betriebsposition an dem Griff fixiert werden kann. Durch die Rasteinrichtung wird vorzugsweise zudem sichergestellt, dass der Griff in einer solchen Weise gedreht wird, dass der Arretierstift in einer von der ersten Führungseinrichtung erlaubten Drehposition ausgerichtet wird. Dazu können Rastpositionen der Rasteinrichtung korrespondierend zu den von der ersten Führungseinrichtung erlaubten Drehpositionen des Arretierstifts eingerichtet sein, d.h. insbesondere in gleicher Anzahl und Winkelfolge. Der erste Anschlag ist bei dieser Weiterbildung in der Regel durch eine Anlage des Griffs an dem Hülsenteil eingerichtet, insbesondere eine stirnseitige Anlage an einem griffseitigen Endbereich des Hülsenteils.

Die Rasteinrichtung kann in axialer Richtung vorstehende Elemente, z.B. Stifte oder Höcker, an dem Griff oder einem griffseitigen Endbereich des Hülsenteils und korrespondierende Ausnehmungen oder Rücknehmungen an dem anderen Bauteil umfassen. Vorzugsweise sind radial zu der Längsachse verlaufende, axial über eine Stirnseite vorstehende Rippen und korrespondierende Einkerbungen vorgesehen. Alternativ kann die Rasteinrichtung einen mehrkantigen Übergriff des Griffs über einen griffseitigen Endbereich des Hülsenteils oder umgekehrt umfassen; d.h. eines der Bauteile weist eine mehrkantige Außenform auf und das andere Bauteil weist eine korrespondierende mehrkantige Innenform auf.

In einer vorteilhaften Weiterbildung eines Arretierbolzens mit Griff sind an dem Hülsenteil und an dem Griff erste Markierungen vorgesehen, um eine Drehstellung des Griffs bezüglich der Längsachse relativ zu dem Hülsenteil anzuzeigen. Durch die ersten Markierungen kann angezeigt werden, dass sich der Arretierstift in einer Drehposition befindet, in welcher die erste Führungseinrichtung nach dem Verstellen im Verstellzustand wieder in Kraft gesetzt werden kann, um den Betriebszustand einzurichten. Die ersten Markierungen können Farbmarkierungen oder Einkerbungen umfassen. Die ersten Markierungen können auch durch eine gleichartige Gestaltung der Außenformen eines griffseitigen Endbereichs des Hülsenteils und eines hülsenseitigen Abschnitts des Griffs realisiert werden. Beispielsweise können mehrkantige Außenformen, entsprechend der Anzahl der unterschiedlichen Drehpositionen der ersten Führungseinrichtung, vorgesehen sein, die fluchtend zueinander auszurichten sind, um ein Wiederinkraftsetzen der ersten Führungseinrichtung zu ermöglichen.

Eine Weiterbildung eines Arretierbolzens mit Griff ist dadurch gekennzeichnet, dass die erste Führungseinrichtung einander entlang der Längsachse übergreifende Elemente an dem Griff und an dem Hülsenteil umfasst. Die erste Führungseinrichtung kann dadurch besonders robust konstruiert werden. Zudem kann der Arretierstift besonders einfach gestaltet werden.

In einer Weiterentwicklung ist vorgesehen, dass die einander übergreifenden Elemente an dem Griff oder an dem Hülsenteil wenigstens einen entlang der Längsachse vorstehenden Dorn und über den Umfang verteilte, insbesondere gleichmäßig verteilte, Axialbohrungen zum Eingreifen des wenigstens einen Dorns umfassen, wobei die Bohrungen an dem nicht mit dem wenigstens einen Dorn versehenen Bauteil ausgebildet sind. Dies erlaubt eine besonders einfache Fertigung. Der wenigstens eine Dorn kann durch einen in dem Griff oder in einem griffseitigen Endbereich des Hülsenteils befestigten und axial teilweise überstehenden Stift gebildet sein. Im Betriebszustand verhindert der zweite Anschlag, dass die einander übergreifenden Elemente außer Eingriff kommen. Der zweite Anschlag wirkt hier grundsätzlich ohne Beteiligung des Griffs zwischen dem Arretierstift und dem Hülsenteil, vorzugsweise unmittelbar zwischen dem Arretierstift und dem Hülsenteil.

Eine andere Weiterbildung eines Arretierbolzens mit einander übergreifenden Elementen an dem Griff und an dem Hülsenteil ist dadurch gekennzeichnet, dass die einander übergreifenden Elemente einen Außenmehrkant an dem Griff oder an dem Hülsenteil und einen korrespondierenden Innenmehrkant an dem nicht mit dem Außenmehrkant versehenen Bauteil umfassen. Dies erlaubt das Einleiten besonders großer Drehmomente über den Griff in das Hülsenteil, beispielsweise, um dieses in einem ersten Bauteil zu verschrauben.

Eine bevorzugte Weiterbildung eines Arretierbolzens mit einem Griff ist dadurch gekennzeichnet, dass eine zweite Führungseinrichtung vorgesehen ist, die ein Verdrehen des Arretierstifts um die Längsachse relativ zu dem Griff zumindest im Betriebszustand, vorzugsweise auch im Verstellzustand, verhindert. Wenn die erste Führungseinrichtung zwischen dem Griff und dem Hülsenteil eingerichtet ist, stellt die zweite Führungseinrichtung zusammen mit der ersten Führungseinrichtung sicher, dass sich die Drehposition des Arretierstifts relativ zum Hülsenteil im Betriebszustand nicht ändert. Die zweite Führungseinrichtung gestattet grundsätzlich ein Verschieben des Arretierstifts gegen den Griff entlang der Längsachse, insbesondere ein Verbringen des Arretierstifts in die Betriebsposition und in die Verstellposition. Wenn die zweite Führungseinrichtung auch im Verstellzustand wirkt, erlaubt sie ein Verändern der Drehposition des Arretierstifts mittels des Griffs.

In einer bevorzugten Weiterentwicklung ist vorgesehen, dass die zweite Führungseinrichtung eine zweite Außenkontur an dem Arretierstift und eine dazu korrespondierende zweite Innenkontur an dem Griff umfasst, bevorzugt wobei die zweite Außenkontur und die zweite Innenkontur jeweils Mehrkantprofile, besonders bevorzugt Sechskantprofile, sind. Dies erlaubt eine robuste Ausführung und einfache Fertigung der zweiten Führungseinrichtung. Die zweite Außenkontur ist von der Spitze des Arretierstifts aus gesehen typischerweise jenseits einer ersten Außenkontur und bevorzugt auch jenseits einer Verjüngung des Arretierstifts ausgebildet. Besonders bevorzugt ist die zweite Außenkontur zu der ersten Außenkontur identisch.

Eine vorteilhafte Ausführungsform des erfindungsgemäßen Arretierbolzens ist dadurch gekennzeichnet, dass in dem Betriebszustand ein Sicherungselement an dem Arretierstift befestigt ist, das zumindest mittelbar, vorzugsweise unmittelbar, an dem zweiten Anschlag mitwirkt. Dies erlaubt einen besonders einfachen konstruktiven Aufbau des Arretierbolzens. Im Verstellzustand kann das Sicherungselement gegenüber dem Arretierstift verschoben oder von diesem gelöst werden. Typischerweise ist der Arretierstift bei dieser Ausführungsform dauerhaft an einem Griff befestigt oder mit einem Griff einstückig ausgebildet. Das Sicherungselement kann beispielsweise hülsenartig ausgebildet sein. Das Sicherungselement kann auf den Arretierstift aufgeschoben werden und kann an dem Arretierstift befestigt werden, z.B. mittels eines Sicherungsrings, etwa nach DIN 471 oder in Form eines Sprengrings. Alternativ kann das Sicherungselement auf den Arretierstift aufgeschraubt werden; es kann hierzu ein Innengewinde aufweisen und der Arretierstift einen korrespondierenden Außengewindeabschnitt.

Bei einer besonders bevorzugten Ausführungsform ist vorgesehen, dass der Arretierstift eine zweite Markierung aufweist, die nur in dem Verstellzustand des Arretierbolzens sichtbar wird. Anhand der Sichtbarkeit bzw. Unsichtbarkeit der zweiten Markierung kann ein Benutzer leicht erkennen, ob sich der Arretierbolzen in dem Verstellzustand oder dem Betriebszustand befindet. Die Markierung zeigt vorzugsweise das Erreichen einer bestimmten Axialposition des Arretierstifts gegenüber dem Hülsenteil an. Dies ist insbesondere nützlich, wenn ein Stellelement zum Verbringen des Arretierstifts in eine Verstellposition und eine Betriebsposition vorgesehen ist. Die zweite Markierung kann beispielsweise eine Farbmarkierung, etwa eine umlaufende Linie, oder eine Einkerbung sei. Typischerweise ist die Markierung nahe der Spitze des Arretierstifts angebracht.

Eine besonders vorteilhafte Ausführungsform des erfindungsgemäßen Arretierbolzens sieht vor, dass die erste Führungseinrichtung eine erste Außenkontur an dem Arretierstift und eine dazu korrespondierende erste Innenkontur an dem Hülsenteil umfasst, bevorzugt wobei die erste Außenkontur und die erste Innenkontur jeweils Mehrkantprofile, besonders bevorzugt Sechskantprofile, sind. Dies erlaubt einen besonders kompakten Aufbau des Arretierbolzens, insbesondere kann der Arretierbolzen in radialer Richtung schlank gestaltet werden. Zudem kann ein solcher Arretierbolzen einfach gefertigt werden. Vorzugsweise entspricht die erste Innenkontur der ersten Außenkontur. Es genügt jedoch, wenn die erste Außenkontur zum Eingreifen der ersten Innenkontur ausgebildet ist, so dass der Arretierstift gegenüber dem Hülsenteil nicht um die Längsachse verdreht werden kann. Als Mehrkantprofile können Drei-, Vier-, Sechs-, Acht- oder Zwölfkantprofile vorgesehen sein. Die Kantenzahl der ersten Innenkontur kann ein Mehrfaches, insbesondere das Doppelte, der Kantenzahl der ersten Außenkontur betragen. Beispielsweise kann die erste Außenkontur ein Vierkantprofil und die erste Innenkontur ein Achtkant sein.

Die zu einer mehrkantigen ersten Außenkontur korrespondierende erste Innenkontur kann auch nach der Art eines Ringschlüssels gestaltet sein, z.B. als Gegenkontur zur Überlagerung zweier um eine halbe Teilung zueinander verdrehter Außenmehrkante oder als Gegenkontur zur Überlagerung dreier um jeweils eine Drittels Teilung zueinander verdrehter Außenmehrkante. Alternativ können Sternprofile verwendet werden. Dadurch kann eine besonders feine Einstellung der Drehposition des Arretierstifts relativ zu dem Hülsenelement erreicht werden. Zudem kann ein besonders geringes Drehspiel eingerichtet werden. Auch Vielrundprofile, z.B. Pentalob, sind denkbar. Grundsätzlich kommen nicht-kreisförmige Profile in Betracht, die (nur) durch Drehung um ganzzahlige Vielfache eines Bruchteils 1/n einer vollen Drehung in sich selbst überführbar sind, d.h. Profile mit n-zähliger Drehsymmetrie. Die erste Innenkontur und die erste Außenkontur sind grundsätzlich im Bereich ihrer jeweiligen Erstreckung in Längsrichtung unveränderlich, d.h. gleichförmig ausgebildet.

Eine bevorzugte Weiterbildung ist dadurch gekennzeichnet, dass der Arretierstift von der Spitze aus gesehen jenseits seiner ersten Außenkontur eine Verjüngung aufweist, die gegenüber der ersten Außenkontur so weit zurückgenommen ist, dass sie ein Verdrehen des Arretierstifts gegenüber dem Hülsenteil erlaubt, wenn im Verstellzustand des Arretierbolzens die Verjüngung des Arretierstifts auf axialer Höhe der ersten Innenkontur des Hülsenteils angeordnet wird. Somit kann der Verstellzustand durch axiales Verschieben des Arretierstifts über die maximal ausgerückte Stellung hinaus eingerichtet werden, indem die Wirkung des ersten Anschlags aufgehoben wird. Die Verjüngung kann auf einfache Weise durch Abdrehen des Arretierstifts gefertigt werden. Eine axiale Länge der Verjüngung entspricht wenigstens der Länge der ersten Innenkontur. Vorzugsweise entspricht die Länge der Verjüngung mehr als dem 1,2-fachen der Länge der ersten Innenkontur. Bevorzugt ist die Länge der Verjüngung nicht größer als das 1,5-fache der Länge der ersten Innenkontur.

Bei einer besonders bevorzugten Weiterentwicklung ist vorgesehen, dass der Arretierstift von der Spitze aus gesehen jenseits der Verjüngung eine zweite Außenkontur aufweist, die zu der ersten Außenkontur identisch ist. Die zweite Außenkontur kann an einer zweiten Führungseinrichtung zwischen dem Arretierstift und einem Griff mitwirken.

Eine besonders vorteilhafte Ausführungsform des erfindungsgemäßen Arretierbolzens ist dadurch gekennzeichnet, dass der Arretierstift an der Spitze eine einseitige Abschrägung aufweist. Durch die einseitige Abschrägung kann der Arretierstift durch Beaufschlagen seiner Spitze mit einer quer zur Längsachse wirkenden Kraft eingerückt werden, wenn diese Kraft auf die einseitige Abschrägung gerichtet ist ("Keilwirkung" der Abschrägung). Dadurch kann ein selbsttätiges Einschnappen eines zweiten Bauteils ermöglicht werden. Bei Beaufschlagung der Spitze mit einer Querkraft von einer anderen Seite, insbesondere gegenüber der einseitigen Abschrägung, wird der Arretierstift demgegenüber nicht selbsttätig eingerückt. Eine Bewegung des zweiten Bauteils in diese Richtungen ist somit durch den Arretierbolzen gesperrt. Diese Ausführungsform eignet sich besonders zum Fixieren einer schwenkbaren Klappen, etwa in der Art einer Türe, in einer geschlossenen oder einer geöffneten Stellung an entsprechenden Rahmenelementen, in die ein solcher Arretierbolzen eingesetzt ist, wobei die Klappe eine Rastausnehmung zum Eingreifen der Spitze des Arretierstifts aufweisen kann. Die einseitige Abschrägung kann gegenüber der Längsachse mehr als 30° geneigt sein, vorzugsweise mehr als 40°, besonders bevorzugt mehr als 50°. Die einseitige Abschrägung ist gegenüber der Längsachse vorzugsweise weniger als 70°, besonders bevorzugt weniger als 60° geneigt. Gegenüber und/oder oberhalb der einseitigen Abschrägung weist die Spitze vorzugsweise eine zylindermantelförmige Kontur auf, die insbesondere parallel zu der Längsachse ausgerichtet ist. Bei Blickrichtung entlang der Längsachse kann die Spitze eine kreisförmige Hüllkontur haben. Die Abschrägung ist vorzugsweise plan ausgeführt. Der abgeschrägte Teil der Spitze liegt dann in einer Ebene. Alternativ kann die Abschrägung konisch ausgeführt sein. Der abgeschrägte Teil der Spitze kann dann auf einem Kegelmantel liegen, insbesondere wobei eine Symmetrieachse des Kegelmantels parallel und versetzt zu der Längsachse verläuft.

Eine bevorzugte Ausführungsform des erfindungsgemäßen Arretierbolzens sieht vor, dass im Betriebszustand der Arretierstift durch ein Federelement in die maximal ausgerückte Stellung vorgespannt ist, insbesondere wobei sich das Federelement an einem Kragen des Arretierstifts und einer radialen Einziehung einer durchgehenden Längsausnehmung des Hülsenteils abstützt. Dies vereinfacht die Benutzung des Arretierbolzens, da die ausgerückte Stellung nicht durch zusätzliche Mittel, z.B. einen einzuschiebenden Splint, gesichert werden muss.

Weitere Vorteile der Erfindung ergeben sich aus der Beschreibung und der Zeichnung. Die vorstehend genannten und die noch weiter ausgeführten Merkmale können erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: einen schematischen Längsschnitt durch eine erste Ausführungsform eines erfindungsgemäßen Arretierbolzens im Betriebszustand;
- Fig. 2a: den Arretierbolzen von Fig. 1 in einer ersten schematischen Explosionsdarstellung bei Blickrichtung von schräg unten;
- Fig. 2b: den Arretierbolzen von Fig. 1 in einer zweiten schematischen Explosionsdarstellung bei Blickrichtung von schräg oben;
- Fig. 3a: den Arretierbolzen von Fig. 1 in einer schematischen teilgeschnittenen Ansicht, wobei eine Rasteinrichtung wirksam ist;
- Fig. 3b: den Arretierbolzen von Fig. 1 im Verstellzustand in einer schematischen teilgeschnittenen Ansicht;
- Fig. 4a: einen erfindungsgemäßen Arretierbolzen im Betriebszustand, montiert an einem ersten Bauteil, wobei ein zweites Bauteil an eine einseitige Abschrägung einer Spitze eines Arretierstifts des Arretierbolzens angenähert wird, in einer schematischen Seitenansicht;
- Fig. 4b: den Arretierbolzen von Fig. 4a beim Vorbeiführen des zweiten Bauteils an der Spitze des Arretierstifts;
- Fig. 4c: den Arretierbolzen von Fig. 4a, nachdem das zweite Bauteil an dem Arretierstift vorbeigeführt wurde, mit dem Arretierstift in der maximal ausgerückten Stellung des Betriebszustands;
- Fig. 5: drei identische erfindungsgemäße Arretierbolzen, die unterschiedlich tief in ein erstes Bauteil eingeschraubt sind, wobei bei dem rechten Arretierbolzen eine gegenüber den beiden anderen Arretierbolzen unterschiedliche Drehposition eines Arretierstifts gegenüber einem Hülsenteil eingerichtet ist, in einer schematischen Seitenansicht;
- Fig. 6a: eine zweite Ausführungsform eines erfindungsgemäßen Arretierbolzens, wobei eine erste Führungseinrichtung durch axiale Dorne und Axialbohrungen gebildet ist, in einem schematischen Längsschnitt;
- Fig. 6b: eine schematische Ansicht mit Blick von unten auf einen Griff des Arretierbolzens von Fig. 6a;
- Fig. 6c: eine schematische Ansicht mit Blick von oben auf ein Hülsenteil des Arretierbolzens von Fig. 6a;
- Fig. 7a: eine dritte Ausführungsform eines erfindungsgemäßen Arretierbolzens, wobei eine erste Führungseinrichtung durch einander übergreifende Mehrkantkonturen an einem Griff und einem Hülsenteil des Arretierbolzens gebildet ist, in einem schematischen Längsschnitt;
- Fig. 7b: eine schematische Ansicht mit Blick von unten auf einen Griff des Arretierbolzens von Fig. 7a;
- Fig. 7c: eine schematische Ansicht mit Blick von oben auf ein Hülsenteil des Arretierbolzens von Fig. 7a;
- Fig. 8: einen schematischen Längsschnitt durch eine vierte Ausführungsform eines erfindungsgemäßen Arretierbolzens, mit einem auf einen Arretierstift aufgeschobenen Sicherungselement im Betriebszustand;
- Fig. 9: einen schematischen Längsschnitt durch eine fünfte Ausführungsform eines erfindungsgemäßen Arretierbolzens im Betriebszustand, wobei ein Griff direkt auf einen Arretierstift aufgeschraubt ist.

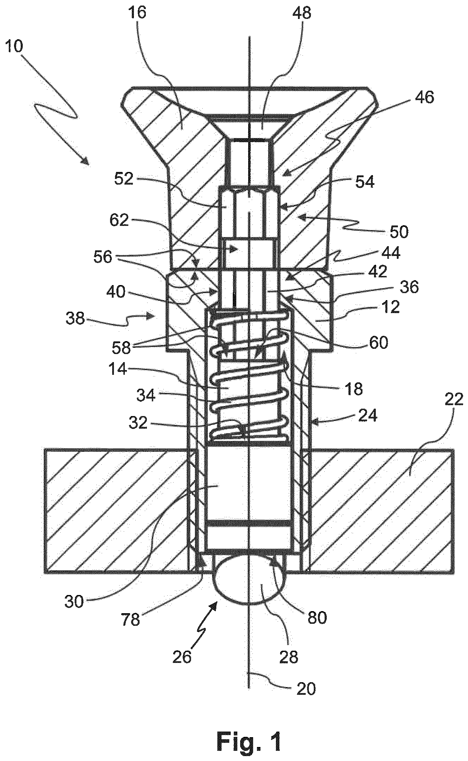

Eine erste Ausführungsform eines erfindungsgemäßen Arretierbolzens **10** ist in **Fig. 1** im Längsschnitt schematisch dargestellt. Der Arretierbolzen 10 umfasst ein Hülsenteil **12** und einen Arretierstift **14.** An dem Arretierstift 14 ist ein Griff **16** befestigt. Das Hülsenteil 12 weist eine durchgehende Längsausnehmung **18** auf. Der Arretierstift 14 durchragt die Längsausnehmung 18. Der Arretierstift 14 ist entlang einer Längsachse **20** gegenüber dem Hülsenteil 12 verschieblich. Der Arretierbolzen 10 ist hier in ein erstes Bauteil **22** eingeschraubt. Das Hülsenteil 12 weist dazu einen Außengewindeabschnitt **24** auf.

Der Arretierstift 14 weist an seinem dem Griff 16 abgewandten Endbereich eine nicht rotationssymmetrische Spitze **26** auf. Die nicht rotationssymmetrische Spitze 26 ist hier mit einer einseitigen Abschrägung **28** des ansonsten zylinderförmigen Endbereichs des Arretierstifts 14 versehen.

Jenseits (hier oberhalb) der nicht rotationssymmetrischen Spitze 26 weist der Arretierstift 14 eine Verdickung **30** auf. An einem Kragen **32** der Verdickung 30 stützt sich ein Federelement **34** ab. Das Federelement 34 ist hier eine zylindrische Schraubenfeder, die den Arretierstift 14 innerhalb der Längsausnehmung 18 des Hülsenteils 12 umgreift. Das Federelement 34 stützt sich weiterhin an einer radialen Einziehung **36** des Hülsenteils 12 ab. Die radiale Einziehung 36 verengt einen Querschnitt der Längsausnehmung 18 an einem griffseitigen Endbereich **38** des Hülsenteils 12. Durch das Federelement 34 ist der Arretierstift 14 in eine maximal ausgerückte Stellung des dargestellten Betriebszustands vorgespannt. In der dargestellten maximal ausgerückten Stellung schließt ein spitzenseitiges Ende **80** der Verdickung 30 bündig mit einem freien Ende **78** des Hülsenteils ab.

Im Bereich der radialen Einziehung 36 weist das Hülsenelement 12 eine erste Innenkontur **40** auf. Die erste Innenkontur 40 ist hierein Innensechskantprofil. Der Arretierstift 14 weist in einem mittleren Bereich eine erste Außenkontur **42** auf, hier ein Sechskantprofil. Die erste Innenkontur 40 des Hülsenteils 12 wirkt mit der ersten Außenkontur 42 des Arretierstifts 14 zusammen, um eine erste Führungseinrichtung **44** zu bilden. Die erste Innenkontur 40 und die erste Außenkontur 42 sind hierfür korrespondierend zueinander ausgebildet, hier als Gegenkonturen.

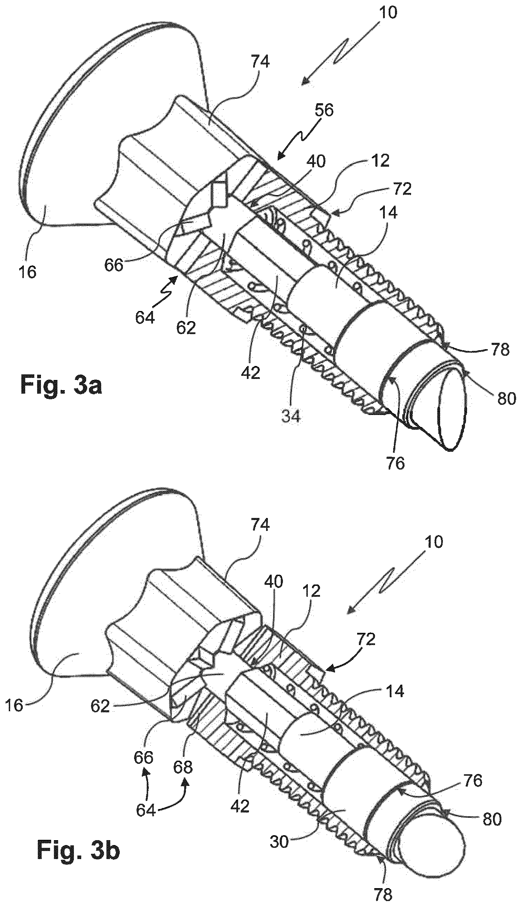

Der Griff 16 ist in der Fig.1 in einer Betriebsposition an dem Arretierstift 14 fixiert. Zum Fixieren des Griffs 16 in der Betriebsposition dient ein Stellelement **46,** das hier eine Schraube **48** umfasst. Mittels des Stellelements 46 kann der Arretierstift 14 auch in eine für einen Verstellzustand charakteristische Verstellposition relativ zu dem Griff 16 verbracht werden, vgl. hierzu auch Fig. 3b. Die Schraube 48 stützt sich einerseits an dem Griff 16 ab, andererseits greift die Schraube 48 in ein Gegengewinde (verdeckt) des Arretierstifts 14 ein. Durch Anziehen bzw. Lösen der Schraube 48 kann der Arretierstift 14 entlang der Längsachse 20 gegenüber dem Griff 16 verschoben werden. Insbesondere kann der Arretierstift 14 in die in Fig. 1 dargestellte Betriebsposition des Betriebszustandes und die Verstellposition des Verstellzustandes (siehe Fig. 3a und 3b) verbracht werden.

Der Arretierstift 14 ist hier über eine zweite Führungseinrichtung **50** in dem Griff 16 geführt. Die zweite Führungseinrichtung 50 umfasst hier eine zweite Außenkontur **52** an einem griffseitigen, der nicht rotationssymmetrischen Spitze 26 abgewandten Ende des Arretierstifts 14. Korrespondierend zu der zweiten Außenkontur 52 des Arretierstifts 14 weist der Griff 16 eine zweite Innenkontur **54** auf. Die zweite Außenkontur 52 und die zweite Innenkontur 54 sind hier jeweils als Sechskantprofile ausgebildet. Insbesondere ist die zweite Außenkontur 52 zu der ersten Außenkontur 42 identisch ausgeführt. Die zweite Führungseinrichtung 50 verhindert ein Verdrehen des Arretierstifts 14 gegenüber dem Griff 16 bezüglich der Längsachse 20.

Durch eine stirnseitige Anlage des Griffs 16 an dem griffseitigen Endbereich 38 des Hülsenteils 12 wird ein erster Anschlag **56** eingerichtet. Solange der Arretierstift 14 in der Betriebsposition an dem Griff 16 befestigt ist, verhindert der erste Anschlag 56, dass der Arretierstift 14 über die dargestellte maximal ausgerückte Stellung hinaus in Richtung der nicht rotationssymmetrischen Spitze 26 aus dem Hülsenteil 12 ausgeschoben wird.

Ein zweiter Anschlag **58** ist hier durch die radiale Einziehung 36 des Hülsenteils 12 und eine Kante **60** des Arretierstifts 14 definiert. Der zweite Anschlag 58 verhindert ein Verschieben des Arretierstifts 14 entlang der Längsachse 20 gegenüber dem Hülsenteil 12 über eine maximal eingerückte Stellung (nicht dargestellt) hinaus.

Zwischen der maximal ausgerückten Stellung und der maximal eingerückten Stellung kann der Arretierstift 14 im dargestellten Betriebszustand gegenüber dem Hülsenteil 12 verschoben werden, etwa durch Ziehen an dem Griff 16 bzw. Loslassen desselben oder durch Drücken auf die nicht rotationssymmetrische Spitze 26, insbesondere deren einseitige Abschrägung 28.

Die erste Führungseinrichtung 44 verhindert unabhängig von der Axialposition des Arretierstifts 14 zwischen der maximal ausgerückten Stellung und der maximal eingerückten Stellung ein Verdrehen des Arretierstifts 14 gegenüber dem Hülsenteil 12 um die Längsachse 20. Mithin wird eine Drehposition des Arretierstifts 14 bezüglich der Längsachse 20 relativ zu dem Hülsenteil 12 von der ersten Führungseinrichtung 44 gesichert. Insbesondere wird dadurch erreicht, dass eine Ausrichtung der nicht rotationssymmetrischen Spitze 26 in Bezug zu dem Hülsenteil 12 unverändert bleibt, solange sich der Arretierbolzen 10 in dem Betriebszustand befindet.

Die erste Führungseinrichtung 44 erlaubt es jedoch grundsätzlich, den Arretierstift 14 in mehreren unterschiedlichen Drehpositionen in dem Hülsenteil 12 auszurichten und eine eingestellte Drehpositionen im Betriebszustand beizubehalten. Im dargestellten Ausführungsbeispiel kann der Arretierstift 14 in sechs jeweils um 60° um die Längsachse 20 gedrehten Drehpositionen über die erste Führungseinrichtung 44 in dem Hülsenteil 12 gehalten werden.

Um zwischen den möglichen Drehpositionen zu wechseln, kann der Arretierbolzen 10 in einen Verstellzustand (in Fig. 1 nicht gezeigt) versetzt werden, siehe zum Verstellzustand Fig. 3a, 3b. Hierzu wird die Schraube 48 des Stellelements 46 gelöst, so dass der Arretierstift 14 unter Wirkung der Kraft des Federelements 34 über die maximale ausgerückte Stellung hinaus aus dem Hülsenteil 12 vorgeschoben wird. Dadurch kommt eine Verjüngung **62** des Arretierstifts 14 in den Bereich der ersten Innenkontur 40 des Hülsenteils. Die Verjüngung 62 ist zwischen der ersten Außenkontur 42 und der zweiten Außenkontur 52 am Arretierstift 14 ausgebildet. Die Verjüngung 62 ist gegenüber der ersten Außenkontur 42 so weit zurückgenommen, dass sie nicht mit der ersten Innenkontur 40 des Hülsenteils 12 zusammenwirkt, hier insbesondere nicht in die Ecken deren sechskantiger Ausformung eingreift. Hier ist die Verjüngung 62 im Querschnitt kreisförmig ausgeführt.

Wenn die Verjüngung 62 im Verstellzustand des Arretierbolzens 10 auf Höhe der ersten Innenkontur 40 angeordnet ist, kann die Drehposition des Arretierstifts 14 gegenüber dem Hülsenteil 12 verändert werden. Hierzu kann der Griff 16 gegenüber dem Hülsenteil 12 um die Längsachse 20 gedreht werden. Die zweite Führungseinrichtung 54 überträgt die Drehung des Griffs 16 auf den Arretierstift 14.

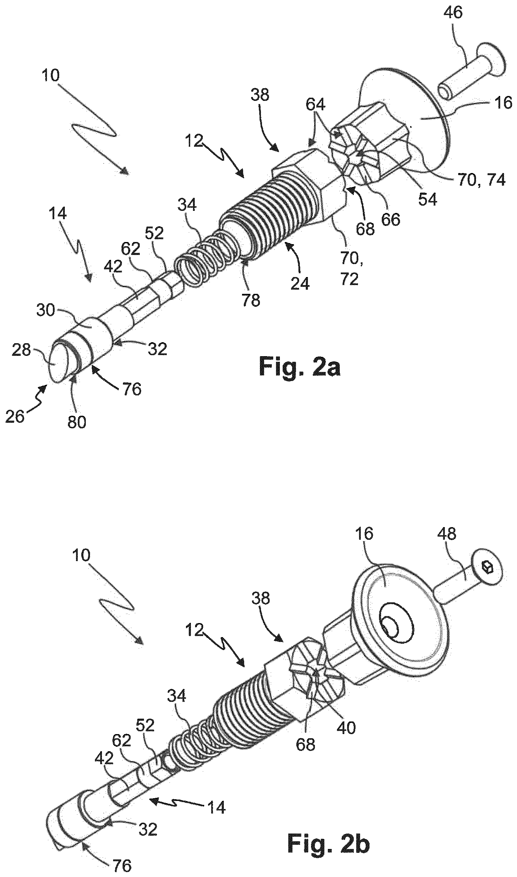

In den **Fig. 2a** und **Fig. 2b** ist der Arretierbolzen 10 von Fig. 1 in Explosionsdarstellungen aus verschiedenen Perspektiven dargestellt. Die oben beschriebenen Einzelheiten der Bauteile des Arretierbolzens 10 sind hier zur Verdeutlichung nochmals mit denselben Bezugszeichen versehen, soweit diese hier klar erkennbar sind.

Weiterhin ist aus den Fig. 2a und 2b zu ersehen, dass der Arretierbolzen 10 eine Rasteinrichtung **64** aufweist, die zwischen dem Hülsenteil 12 und dem Griff 16 wirken kann. Wenn der erste Anschlag 56 (vgl. Fig. 1) wirksam ist, verhindert die Rasteinrichtung 64 ein Verdrehen des Griffs 16 gegenüber dem Hülsenteil 12 bzw. definiert gegenseitige Drehpositionen von Griff 16 und Hülsenteil 12 vor. Die Rasteinrichtung 64 wirkt dabei unabhängig von der ersten Führungseinrichtung 44 (vgl. Fig. 1) zwischen dem Arretierstift 14 und dem Hülsenteil 12. Die Rasteinrichtung 64 ist somit insbesondere auch im Verstellzustand des Arretierbolzens 10 wirksam, wenn der Griff 16 sich im ersten Anschlag 56 am Hülsenteil 12 abstützt.

Die Rasteinrichtung 64 umfasst hier in axialer Richtung (entlang der Längsachse 20, vgl. Fig. 1) vorstehende in radialer Richtung (quer zu der Längsachse 20) verlaufende Rippen **66** stirnseitig an dem Griff 16 und korrespondierende Einkerbungen **68** an dem griffseitigen Endbereich 38 des Hülsenteils 12.

Durch Abheben des Griffs 16 von dem Hülsenteil 12 kann die Rasteinrichtung 64 außer Kraft gesetzt werden. Der Griff 16 kann dann gegenüber dem Hülsenteil 12 gedreht werden, wenn die erste Führungseinrichtung 44 im Verstellzustand nicht wirksam ist.

An dem Griff 16 und dem Hülsenteil 12 sind hier weiterhin erste Markierungen **70** ausgebildet. Die ersten Markierungen umfassen bei dieser Ausführungsform des Arretierbolzens 10 Kanten **72** des sechskantig gestalteten griffseitigen Endbereichs 38 der Hülsenteils 12 und Fasen **74** an dem Griff 16. Bei Anordnung der Fasen 74 in axialer Verlängerung der Kanten 72 ist der Griff 16 relativ zu dem Hülsenteil 12 so ausgerichtet, dass ein gleichzeitiger Eingriff des Arretierstifts 14 in die erste Innenkontur 40 des Hülsenteils 12 und die zweite Innenkontur 52 des Griffs 16 mit der ersten Außenkontur 42 bzw. der zweiten Außenkontur 52 erfolgen kann.

An der Verdickung 30 des Arretierstifts ist eine zweite Markierung **76** ausgebildet, hier in Form einer umlaufenden Einkerbung. Im Betriebszustand des Arretierbolzens 10 ist die zweite Markierung 76 stets innerhalb des Hülsenteils 12 angeordnet, so dass sie nicht von außen sichtbar ist. Beim montiertem Arretierbolzen 10 wird die zweite Markierung 76 beim Vorschieben des Arretierstifts 14 über die maximal ausgerückte Stellung hinaus am freien Ende 78 des Hülsenteils 12 sichtbar und zeigt dadurch an, dass sich der Arretierstift 14 in der Verstellposition relativ zu dem Griff 16 befindet.

In den **Fig. 3a** und **3b** ist für den Arretierbolzen 10 von Fig. 1 das Verstellen der Drehposition des Arretierstifts 14 gegenüber dem Hülsenteil 12 dargestellt.

In Fig. 3a ist der erste Anschlag 56 wirksam und die Rippen 66 der Rasteinrichtung 64 greifen in die Einkerbungen 68 ein. Der Arretierstift 14 ist gegenüber dem Hülsenteil 12 über die maximal ausgerückte Stellung des Betriebszustands vorgeschoben. Hierzu wurde die Schraube 48 des Stellelements 46 (vgl. Fig. 1) etwas gelöst. Der Arretierstift 14 wird infolge dessen durch das Federelement 34 entlang der Längsachse von dem Griff 16 weg gedrückt. Die zweite Markierung 76 lässt erkennen, dass die Verstellposition des Arretierstifts 13 gegenüber dem Griff 16 fast erreicht ist. Mithin muss die Schraube noch etwas weiter gelöst werden, um den Arretierstift 14 in die Verstellposition relativ zu dem Griff 16 zu verbringen. Die Verjüngung 62 des Arretierstifts 14 ist auf Höhe der ersten Innenkontur 40 des Hülsenteils 12 angeordnet.

In Fig. 3b befindet sich der Arretierbolzen 10 im Verstellzustand. Der Arretierstift 14 ist, wie oben erläutert, nun durch weiteres Betätigen des Stellelements in die Verstellposition relativ zu dem Griff 16 gebracht worden. Der erste Anschlag 56 ist nicht mehr wirksam. Die Rippen 66 und die Einkerbungen 68 der Rasteinrichtung 64 sind außer Eingriff gebracht. Der Arretierstift 14 ist hierfür durch Abheben des Griffs 16 von dem Hülsenteil 12 etwas weiter in das Hülsenteil 12 zurückgezogen worden; der Arretierstift 14 ist aber immer noch über die maximal ausgerückte Stellung des Betriebszustands hinaus vorgeschoben, vgl. Fig. 1, wo ein spitzenseitiges Ende 80 der Verdickung 30, anders als hier, bündig mit dem freien Ende 78 des Hülsenteils 12 abschließt.

Im Verstellzustand ist die erste Führungseinrichtung 44 (vgl. Fig. 1) außer Kraft gesetzt. Die erste Außenkontur 42 des Arretierstifts 14 greift nicht in die erste Innenkontur 40 des Hülsenteils 12 ein. Stattdessen ist die Verjüngung 62 des Arretierstifts 14 auf Höhe der ersten Innenkontur 40 angeordnet, so dass ein Verdrehen des Arretierstifts 14 gegenüber dem Hülsenteil 12 möglich ist.

In der Konfiguration von Fig. 3b ist der Arretierstift 14 gegenüber der Konfiguration von Fig. 3a gegenüber dem Hülsenteil 12 um 90° gedreht. Die Fasen 74 sind in Fig. 3b nicht mehr in Verlängerung der Kanten 72 angeordnet. Ein Einführen der ersten Außenkontur 42 des Arretierstifts 14 in die erste Innenkontur 40 des Hülsenteils ist in dieser Drehstellung nicht möglich; mithin kann der Betriebszustand nicht eingerichtet werden. Um den Betriebszustand einrichten zu können, muss der Arretierstift 14 um weitere 30° (oder 90°, oder 150°, oder 210°, oder 270°, usw.) gegenüber dem Hülsenteil 12 gedreht werden. Wenn die Rippen 66 wieder in die Einkerbungen 68 eingreifen können, ist eine der möglichen Drehpositionen des Betriebszustands erreicht.

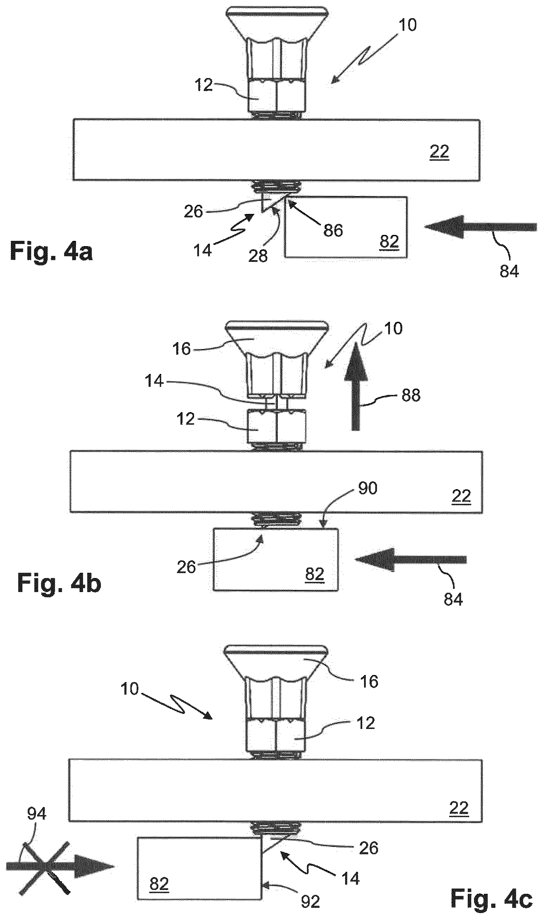

In den **Fig. 4a, 4b** und **4c** ist eine dreiteilige Sequenz der Verwendung eines erfindungsgemäßen Arretierbolzens 10 dargestellt. Der Arretierbolzen 10 entspricht in Aufbau und Funktion dem in den Fig. 1 bis 3b dargestellten und oben beschriebenen erfindungsgemäßen Arretierbolzen. Der Arretierbolzen 10 ist hier in ein erstes Bauteil 22 eingeschraubt. Ein zweites Bauteil **82** soll mit Hilfe des Arretierbolzens 10 in seiner Position relativ zu dem ersten Bauteil 22 fixiert werden.

In der Fig. 4a ist dargestellt, wie das zweite Bauteil 82 von rechts in Pfeilrichtung **84** an den Arretierbolzen 10 angenähert wird. Das zweite Bauteil 82 ist in vertikaler Richtung (nach unten) in nicht näher dargestellter Weise geführt. Der Arretierbolzen 10 befindet sich im Betriebszustand. Sein Arretierstift 14 ist in die maximal ausgerückte Stellung vorgespannt. Eine Ecke **86** des zweiten Bauteils 82 berührt eine nicht rotationssymmetrische Spitze 26 des Arretierstifts 14 im Bereich einer einseitigen Abschrägung 28. Beim weiteren Vorschieben des zweiten Bauteils 82 in Pfeilrichtung 84 wird der Arretierstift 14 durch die Keilwirkung der einseitigen Abschrägung 28 nach oben ausgelenkt werden.

Im Zustand von Fig. 4b wurde das zweite Bauteil 82 so weit in Pfeilrichtung 84 vorgeschoben, dass der Arretierstift 14 und ein Griff 16 des Arretierbolzens 10 in Pfeilrichtung **88** nach oben ausgelenkt sind. Die nicht rotationssymmetrische Spitze 26 des Arretierstifts 14 wird von einem (verdeckten) Federelement des Arretierbolzens 10 gegen eine Oberseite **90** des zweiten Bauteils 82 gedrückt. Währenddessen sichert die erste Führungseinrichtung 44 (vgl. Fig. 1) die eingestellte Drehposition des Arretierstifts 14 gegenüber dem Hülsenteil 12.

In der in Fig. 4c gezeigten Konfiguration wurde das zweite Bauteil 82 weiter nach links vorgeschoben. Der Arretierstift 14 wurde von dem Federelement (verdeckt) wieder in die maximal ausgerückte Stellung zurückgestellt. Die nicht rotationssymmetrische Spitze 26 hintergreift eine rechte Seitenfläche **92** des zweiten Bauteils 82. Die Position des zweiten Bauteils 82 ist dadurch gegenüber dem ersten Bauteil insofern fixiert, als dass das zweite Bauteil 82 nicht in Pfeilrichtung **94** nach rechts zurückgeschoben werden kann. Um das zweite Bauteil 82 in Pfeilrichtung 94 nach rechts zurückführen zu können, müsste der Arretierstift 14 durch Ziehen am Griff 16 angehoben werden (nicht dargestellt).

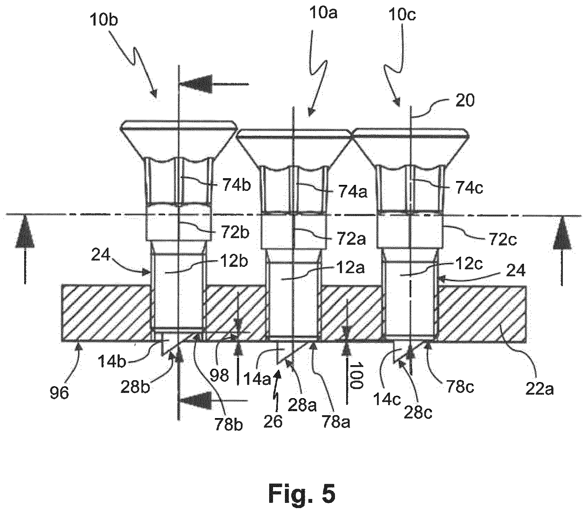

In der **Fig. 5** sind drei identische erfindungsgemäße Arretierbolzen **10a**, **10b, 10c** dargestellt. Die Arretierbolzen 10a, 10b, 10c entsprechen in Aufbau und Funktion dem in den Fig. 1 bis 3a dargestellten und oben beschriebenen Arretierbolzen 10. Die Arretierbolzen 10a, 10b, 10c sind unterschiedlich tief in ein erstes Bauteil 22a eingeschraubt. Man beachte, dass alle drei Gewindebohrungen in dem zweiten Bauteil 22a relativ zueinander keinen Drehversatz um eine Hochachse aufweisen. Die Gewindebohrungen sind mithin durch eine reine Translation ineinander überführbar.

Der Arretierbolzen 10a ist so tief in das erste Bauteil 22a eingeschraubt, dass ein freies Ende **78a** eines Hülsenteils **12a** des Arretierbolzens 10a bündig mit einer Unterseite **96** des ersten Bauteils 22a abschließt. In dieser Stellung ist eine einseitige Abschrägung **28a** einer nichtrotationssymmetrischen Spitze 26 eines Arretierstifts **14a** des Arretierbolzens 10a nach rechts gerichtet. Sowohl eine Kante 72a als auch eine Fase 74a des Arretierbolzens 10a weisen nach vorne (aus der Zeichenebene heraus).

Der Arretierbolzen 10b ist gegenüber dem Arretierbolzen 10a um eine ganze Umdrehung weniger tief in das zweite Bauteil 22a eingeschraubt. Ein freies Ende **78b** eines Hülsenteils **12b** des Arretierbolzens 10b ist daher um die Höhe **98** eines Gewindegangs des Außengewindeabschnitts 24 gegenüber der Unterseite 96 des ersten Bauteils 22a zurückgesetzt. Die Drehposition des Arretierstifts 14b gegenüber dem Hülsenteil 12b entspricht der Drehposition des Arretierstifts 14a gegenüber dem Hülsenteil 12a. Daher zeigt auch die einseitige Abschrägung **28b** des Arretierstifts 14b nach rechts. Sowohl eine Kante 72b als auch eine Fase 74b des Arretierbolzens 10b weisen (wie beim Arretierbolzen 10a) nach vorne.

Der Arretierbolzen 10c ist gegenüber dem Arretierbolzen 10a um ein Sechstel einer Umdrehung weniger tief in das zweite Bauteil 22a eingeschraubt. Ein freies Ende **78c** eines Hülsenteils **12c** des Arretierbolzens 10c ist daher um ein Sechstel **100** der Höhe eines Gewindegangs des Außengewindeabschnitts 24 gegenüber der Unterseite 96 des ersten Bauteils 22a zurückgesetzt. Durch das weniger tiefe Einschrauben weist eine Kante **72c** des Hülsenteils 12c nicht nach vorne, sondern ist in der Zeichnung nach rechts weggedreht. Die Fase 74c weist gleichwohl nach vorne, so dass auch die einseitige Abschrägung 28c des Arretierstifts 14c nach rechts ausgerichtet ist. Um dies zu ermöglichen, ist eine Drehposition des Arretierstifts 14c gegenüber dem Hülsenteil 12c anders gewählt als bei den beiden Arretierbolzen 10a und 10b. Der Arretierstift 14c ist gegenüber dem Hülsenteil 12c im Vergleich zu den Arretierbolzen 10a, 10b um 60° in einer (verdeckten) ersten Führungseinrichtung (vgl. Fig. 1, dortiges Bezugszeichen 44) bei Blick von oben entlang einer Längsachse 20 nach rechts (im Uhrzeigersinn) gedreht.

Durch die Möglichkeit, die Drehposition des Arretierstifts gegenüber dem Hülsenteil in der Führungseinrichtung zu verstellen, wird bei dem erfindungsgemäßen Arretierbolzen eine (im Rahmen Anzahl der möglichen Drehpositionen) feine Höheneinstellung bei gleichzeitiger freier Wahl der rotatorischen Ausrichtung der nicht rotationssymmetrischen Spitze ermöglicht. Umgekehrt kann bei vorgegebener Höheneinstellung (etwa durch einen Gewindeanschlag des Hülsenteils oder einen gewünschten Überstand der Spitze über die Unterseite des ersten Bauteils hinaus) im Rahmen der möglichen Drehpositionen eine Orientierung des Arretierstifts gegenüber dem ersten Bauteil fein eingestellt werden. Man beachte, dass die Einschraubtiefe des Hülsenteils mit einer Kontermutter (nicht dargestellt) gesichert werden kann, falls gewünscht.

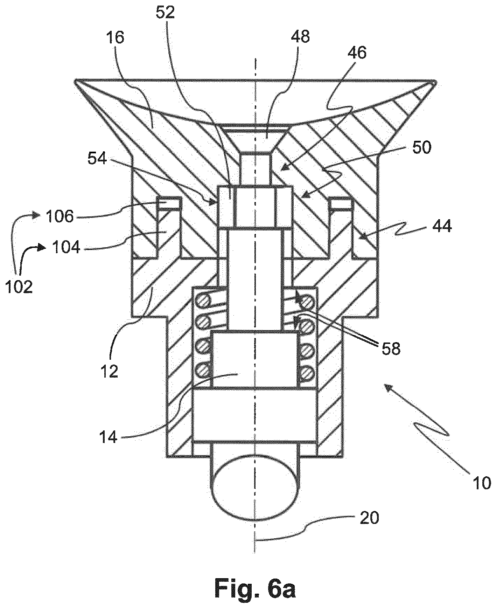

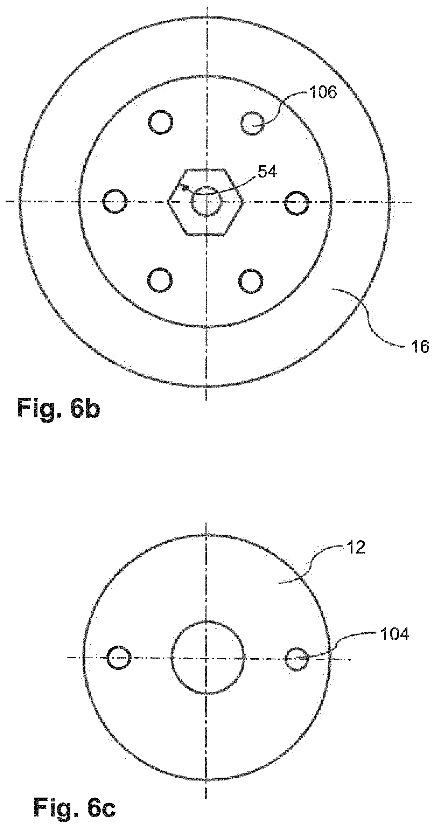

Die **Fig. 6a** zeigt eine zweite Ausführungsform eines erfindungsgemäßen Arretierbolzens 10 in einem schematischen Längsschnitt. In der **Fig. 6b** ist ein Griff 16 des Arretierbolzens 10 bei Ansicht von unten mit Blickrichtung entlang einer Längsachse 20 dargestellt. Die **Fig. 6c** zeigt ein Hülsenteil 12 des Arretierbolzens 10 bei Blick entlang der Längsachse 20 von oben.

Eine erste Führungseinrichtung 44 des Arretierbolzens 10 umfasst hier einander übergreifende Elemente **102,** nämlich entlang der Längsachse 20 vorstehende Dorne **104** an dem Hülsenteil 12 und korrespondierende Axialbohrungen **106** in dem Griff 16. Der Griff 16 weist hier sechs gleichmäßig um die Längsachse 20 verteilte Axialbohrungen 106 auf. Das Hülsenteil 12 ist mit zwei einander bezüglich der Längsachse 20 gegenüberliegenden Dornen 104 versehen.

Eine zweite Führungseinrichtung 50 des Arretierbolzens 10 umfasst eine zweite Außenkontur 52 eines Arretierstifts 14 und eine zweite Innenkontur 54 des Griffs 16. Die zweite Außenkontur 52 und die zweite Innenkontur 54 sind hier jeweils als Sechskantprofile gestaltet.

Der Arretierbolzen 10 ist in Fig. 6a im Betriebszustand gezeigt. Ein zweiter Anschlag 58 verhindert, dass der Griff 16 so weit von dem Hülsenteil 12 abgehoben werden kann, dass die einander entlang der Längsachse 20 übergreifenden Elemente 102 außer Eingriff kommen.

Um die Drehposition des Arretierstifts 14 gegenüber dem Hülsenteil 12 verändern zu können, kann der Arretierstift 14 mittels eines Stellelements 46, das hier eine Schraube 48 umfasst, gegenüber dem Griff 16 aus der gezeigten Betriebsposition in eine nicht dargestellte Verstellposition entlang der Längsachse 20 (in Fig. 6a nach unten) verschoben werden. Wenn sich der Arretierstift 14 in der Verstellposition befindet, greift der zweite Anschlag 58 erst später, d.h. wenn der Griff 16 weiter von dem Hülsenteil 12 abgehoben ist. Die einander übergreifenden Elemente 102 sind dann nicht mehr im Eingriff miteinander, so dass die Drehposition des Arretierstifts 14 gegenüber dem Hülsenteil 12 verstellt werden kann. Eine neu eingestellte Drehposition kann durch Rückführen des Arretierstifts 14 in die Betriebsposition, hier durch Anziehen der Schraube 48, gesichert werden.

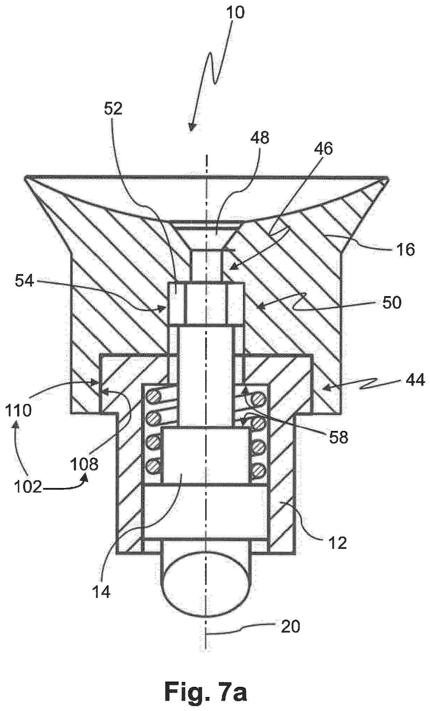

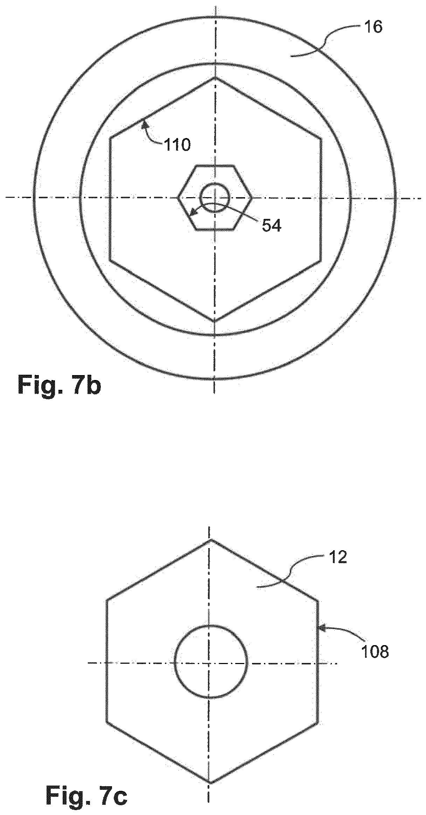

Die **Fig. 7a** zeigt eine dritte Ausführungsform eines erfindungsgemäßen Arretierbolzens 10 in einem schematischen Längsschnitt. In der **Fig. 7b** ist ein Griff 16 des Arretierbolzens 10 bei Ansicht von unten mit Blickrichtung entlang einer Längsachse 20 dargestellt. Die **Fig. 7c** zeigt ein Hülsenteil 12 des Arretierbolzens 10 bei Blick entlang der Längsachse 20 von oben.

Eine erste Führungseinrichtung 44 des Arretierbolzens 10 umfasst hier einander übergreifende Elemente **102,** nämlich einen Außenmehrkant **108** an dem Hülsenteil 12 und einen korrespondierenden Innenmehrkant **110** in dem Griff 16. Der Außenmehrkant 108 und der Innenmehrkant 110 sind hier jeweils als Sechskantprofile gestaltet.

Eine zweite Führungseinrichtung 50 ist bei dem Arretierbolzen 10 von Fig. 7a identisch wie bei dem Arretierbolzen von Fig. 6a gestaltet. Auch die Funktion des Arretierbolzens 10 von Fig. 7a entspricht insbesondere im Hinblick auf die Sicherung der Drehposition des Arretierstifts und den Übergang vom Betriebszustand in dem Verstellzustand und umgekehrt der des Arretierbolzens von Fig. 6a. Hierzu sei daher auf die obigen Ausführungen verwiesen; die entsprechenden Bezugszeichen sind auch in den Fig. 6a, 6b, 6c eingezeichnet.

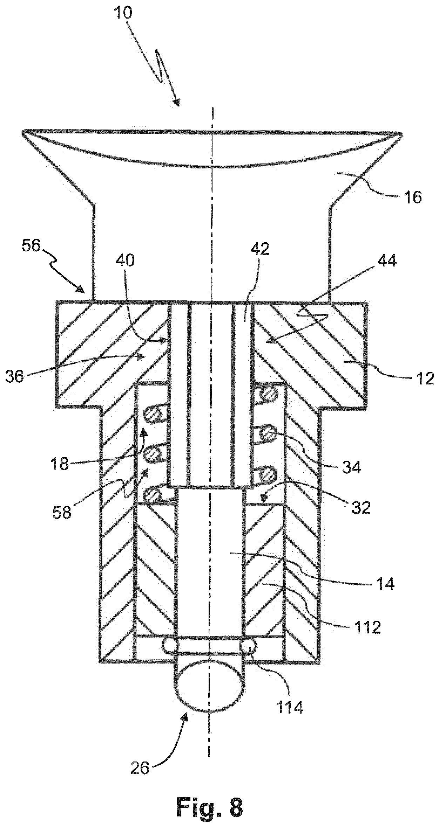

Die **Fig. 8** zeigt eine vierte Ausführungsform eines erfindungsgemäßen Arretierbolzens 10 in einer schematischen, teilgeschnittenen Seitenansicht. Der Arretierbolzen 10 weist einen Arretierstift 14 auf, der einstückig mit einem Griff 16 ausgebildet ist. Eine erste Führungseinrichtung 44, welche eine Drehposition des Arretierstifts 14 mit einer nicht rotationssymmetrischen Spitze 26 relativ zu einem Hülsenteil 12 im dargestellten Betriebszustand des Arretierbolzens 10 sichert, umfasst eine erste Außenkontur 42 an dem Arretierstift 14 und eine erste Innenkontur 40 an dem Hülsenteil 12. Die erste Außenkontur 42 und die erste Innenkontur 40 sind hier jeweils als Sechskantprofile gestaltet.

Auf den Arretierstift 14 ist ein Sicherungselement **112** aufgeschoben. Das Sicherungselement 112 hat hier die Form einer Hülse. Das Sicherungselement 112 ist durch einen Sprengring **114** auf dem Arretierstift 14 befestigt. Ein Federelement 34 stützt sich zwischen einer radialen Einziehung 36 einer durchgehenden Längsausnehmung 18 des Hülsenteils 12, in welcher auch die erste Innenkontur 40 ausgeformt ist, und einem an dem Sicherungselement 114 ausgebildeten Kragen 32 ab. Das Federelement 34 spannt den Arretierstift 14 in die dargestellte maximal ausgerückte Stellung des Betriebszustands vor. Ein zweiter Anschlag, der eine maximal eingerückte Stellung definiert, ist hier durch eine Blocklänge des Federelements 34 zwischen der radialen Einziehung und dem Sicherungselement 112 bestimmt.

Um die Drehposition des Arretierstifts 14 relativ zu dem Hülsenteil verändern zu können, wird für einen Verstellzustand das Sicherungselement 112 von dem Arretierstift abgezogen, nachdem zuvor der Sprengring 114 gelöst wurde. Der Arretierstift 14 kann sodann nach oben aus dem Hülsenelement 12 herausgezogen und in einer neuen Drehposition wieder eingeführt werden. Um die neu eingestellte Drehposition zu sichern, wird das Hülsenelement 112 wieder auf den Arretierstift 14 aufgeschoben und mittels des Sprengrings 114 fixiert. Bei dieser Prozedur verbleibt das Federelement 34 entweder in dem Hülsenelement 12 oder es wird vor dem Aufschieben des Sicherungselements 112 wieder eingesetzt.

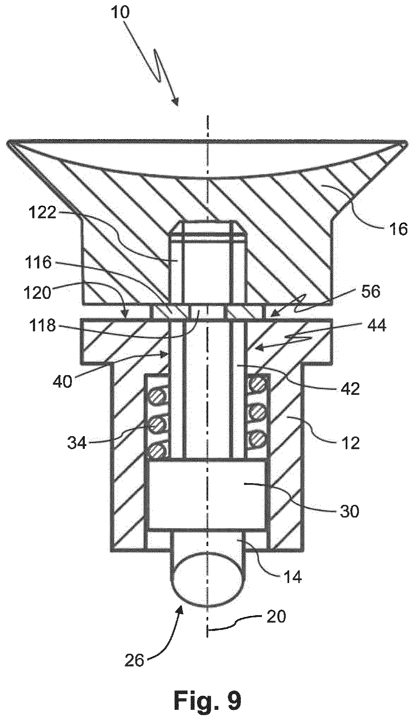

Die **Fig. 9** zeigt eine fünfte Ausführungsform eines erfindungsgemäßen Arretierbolzens 10 in einem schematischen Längsschnitt. Ein Arretierstift 14 ist über eine erste Führungseinrichtung 44 gegenüber einem Hülsenteil 12 in seiner Drehposition gesichert und entlang einer Längsachse 20 geführt. Zur radialen Führung des Arretierstifts 14 trägt auch eine Verdickung 30 des Arretierstifts 14 bei. Der Arretierstift 14 ist gemäß Fig. 9 in eine maximale ausgerückte Stellung eines Betriebszustands des Arretierbolzens 10 durch ein Federelement 34 vorgespannt. Die maximal ausgerückte Stellung wird durch einen ersten Anschlag 56 zwischen einem Sicherungsclip **116,** der auf einen Hals **118** des Arretierstifts 14 aufgeschoben ist, und einer Stirnseite **120** des Hülsenteils 12 definiert. Ein Griff 16 ist über eine Gewindeverbindung **122** an dem Arretierstift befestigt.

Um den Arretierbolzen 10 in den Verstellzustand zu überführen und die Drehposition des Arretierstifts 14 gegenüber dem Hülsenteil 12 zu verändern, wird zunächst der Griff 16 von dem Arretierstift 14 abgeschraubt. Sodann wird der Sicherungsclip 116 von dem Hals 118 des Arretierstifts 14 entfernt. Der Arretierstift 14 kann nun entlang der Längsachse 20 nach unten aus dem Hülsenteil 12 entnommen werden und in einer neuen Drehposition wieder von unten in das Hülsenteil 12 eingesetzt werden. Um die neue Drehposition zu sichern wird zunächst der Sicherungsclip 116 wieder auf den Hals 118 aufgeschoben. Sodann kann der Griff 16 auf den Arretierstift 14 aufgeschraubt werden.

Es sei angemerkt, dass der Sicherungsclip 116 grundsätzlich auch weggelassen werden könnte. Der erste Anschlag 56 würde dann unmittelbar zwischen dem Griff 16 und der Stirnseite 120 des Hülsenteils 12 wirken. Es bestünde dann jedoch die Gefahr, dass sich die Gewindeverbindung 122 im Betrieb des Arretierbolzens 10 lockert, etwa beim Ziehen an dem Griff 16, so dass der erste Anschlag nicht mehr die vorgesehene maximal ausgerückte Stellung definieren würde, sondern erst etwas später greifen würde.

Alternativ könnte bei dieser Ausführungsform des Arretierbolzens 10 (mit oder ohne Sicherungsclip 116) der Griff anstelle der Gewindeverbindung 122 beispielsweise mittels eines Querstifts an dem Arretierstift 14 befestigt werden (nicht dargestellt.)

### Bezugszeichenliste:

Arretierbolzen **10; 10a, 10b, 10c**
Hülsenteil **12; 12a, 12b, 12c**
Arretierstift **14; 14a, 14b, 14c**
Griff **16**
Längsausnehmung **18**
Längsachse **20**
erstes Bauteil **22; 22a**
Außengewindeabschnitt **24**
nicht rotationssymmetrische Spitze **26**
einseitige Abschrägung **28; 28a, 28b, 28c**
Verdickung **30**
Kragen **32**
Federelement **34**
radiale Einziehung **36**
griffseitiger Endbereich **38** des Hülsenteils 12
erste Innenkontur **40** des Hülsenteils 12
erste Außenkontur **42** des Arretierstifts 14
erste Führungseinrichtung **44**
Stellelement **46**
Schraube **48**
zweite Führungseinrichtung **50**
zweite Außenkontur **52** des Arretierstifts 14
zweite Innenkontur **54** des Griffs 16
erster Anschlag **56**
zweiter Anschlag **58**
Kante **60**
Verjüngung **62**
Rasteinrichtung **64**
Rippen **66**
Einkerbungen **68**
erste Markierungen **70**
Kanten **72; 72a, 72b, 72c**
Fasen **74; 74a, 74b, 74c**
zweite Markierung **76**
freies Ende **78; 78a, 78b, 78c**
spitzenseitiges Ende **80** der Verdickung 30
zweites Bauteil **82**
Pfeilrichtung **84**
Ecke **86**
Pfeilrichtung **88**
Oberseite **90**
Seitenfläche **92**
Pfeilrichtung **94**
Unterseite **96**
Höhe **98** eines Gewindegangs
Sechstel **100** der Höhe eines Gewindegangs
einander übergreifende Elemente **102**
Dorn **104**
Axialbohrung **106**
Außenmehrkant **108**
Innenmehrkant **110**
Sicherungselement **112**
Sprengring **114**
Sicherungsclip **116**
Hals **118**
Stirnseite **120**
Gewindeverbindung **122**

## Patentansprüche

1. Arretierbolzen (10; 10a, 10b, 10c) umfassend ein Hülsenteil (12; 12a, 12b, 12c) und einen Arretierstift (14; 14a, 14b, 14c),
wobei in einem Betriebszustand des Arretierbolzens (10; 10a, 10b, 10c) der Arretierstift (14; 14a, 14b, 14c) entlang einer Längsachse (20) zwischen einer maximal ausgerückten Stellung, die durch einen ersten Anschlag (56) definiert ist, und einer maximal eingerückten Stellung, die durch einen zweiten Anschlag (58) definiert ist, gegenüber dem Hülsenteil (12; 12a, 12b, 12c) verschieblich ist, und
wobei eine erste Führungseinrichtung (44) vorgesehen ist, die eine Ausrichtung des Arretierstifts (14; 14a, 14b, 14c) in wenigstens zwei unterschiedlichen Drehpositionen bezüglich der Längsachse (20) relativ zu dem Hülsenteil (12; 12a, 12b, 12c) ermöglicht, wobei der Arretierstift (14; 14a, 14b, 14c) an seinem einem Griff (16) des Arretierbolzens (10; 10a, 10b, 10c) abgewandten Endbereich eine bezüglich der Längsachse (20) nicht rotationssymmetrische und nicht drehsymmetrische Spitze (26) aufweist, und wobei in einem Verstellzustand des Arretierbolzens (10; 10a, 10b, 10c) der Arretierstift (14; 14a, 14b, 14c) in eine beliebige der unterschiedlichen Drehpositionen relativ zu dem Hülsenteil (12; 12a, 12b, 12c) überführbar ist,
**dadurch gekennzeichnet,**
- **dass** im Betriebszustand des Arretierbolzens (10; 10a, 10b, 10c) die erste Führungseinrichtung (44) eine eingestellte Drehposition des Arretierstifts (14; 14a, 14b, 14c) relativ zu dem Hülsenteil (12; 12a, 12b, 12c) unabhängig davon sichert, in welcher Axialposition zwischen der maximal ausgerückten Stellung und der maximal eingerückten Stellung sich der Arretierstift (14; 14a, 14b, 14c) befindet.

2. Arretierbolzen (10; 10a, 10b, 10c) nach Anspruch 1, **dadurch gekennzeichnet, dass** in dem Verstellzustand der Arretierstift (14; 14a, 14b, 14c) über die maximal eingerückte oder die maximal ausgerückte Stellung des Betriebszustands hinaus gegenüber dem Hülsenteil (12; 12a, 12b, 12c) in axialer Richtung verschoben werden kann.

3. Arretierbolzen (10; 10a, 10b, 10c) nach Anspruch 1 oder 2, **dadurch gekennzeichnet,**
**dass** der Arretierbolzen (10; 10a, 10b, 10c) den Griff (16) zum axialen Verschieben des Arretierstifts (14; 14a, 14b, 14c) gegenüber dem Hülsenteil (12; 12a, 12b, 12c) umfasst,
**dass** in dem Betriebszustand der Arretierstift (14; 14a, 14b, 14c) in einer Betriebsposition an dem Griff (16) fixiert ist, und
**dass** in dem Verstellzustand der Arretierstift (14; 14a, 14b, 14c) in eine von der Betriebsposition verschiedene Verstellposition relativ zu dem Griff (16) verbracht ist.

4. Arretierbolzen (10; 10a, 10b, 10c) nach Anspruch 3, **dadurch gekennzeichnet, dass** in der Verstellposition der Arretierstift (14; 14a, 14b, 14c) im Vergleich zur Betriebsposition entlang der Längsachse (20) gegenüber dem Griff (16) verschoben ist.

5. Arretierbolzen (10; 10a, 10b, 10c) nach Anspruch 3 oder 4, **dadurch gekennzeichnet, dass** der Arretierbolzen (10; 10a, 10b, 10c) ein Stellelement (46) umfasst zum Verfahren des Arretierstifts (14; 14a, 14b, 14c) zwischen der Verstellposition und der Betriebsposition, insbesondere wobei das Stellelement (46) eine Schraube (48) umfasst, die sich einerseits an dem Griff (16) abstützt und die andererseits in den Arretierstift (14; 14a, 14b, 14c) eingreift.

6. Arretierbolzen (10; 10a, 10b, 10c) nach einem der Ansprüche 3 bis 5, **dadurch gekennzeichnet, dass** eine Rasteinrichtung (64) zwischen dem Hülsenteil (12; 12a, 12b, 12c) und dem Griff (16) vorgesehen ist, die unabhängig von der ersten Führungseinrichtung (44) ein Verdrehen des Griffs (16) gegenüber dem Hülsenteil (12; 12a, 12b, 12c) um die Längsachse (20) verhindert, wenn der erste Anschlag (56) des Arretierbolzens (10; 10a, 10b, 10c) wirkt.

7. Arretierbolzen (10) nach einem der Ansprüche 3 bis 6, **dadurch gekennzeichnet, dass** die erste Führungseinrichtung (44) einander entlang der Längsachse (20) übergreifende Elemente (102) an dem Griff (16) und an dem Hülsenteil (12) umfasst.

8. Arretierbolzen (10) nach Anspruch 7, **dadurch gekennzeichnet, dass** die einander übergreifenden Elemente (102) an dem Griff (16) oder an dem Hülsenteil (12) wenigstens einen entlang der Längsachse (20) vorstehenden Dorn (104) und über den Umfang verteilte, insbesondere gleichmäßig verteilte, Axialbohrungen (106) zum Eingreifen des wenigstens einen Dorns (104) umfassen, wobei die Axialbohrungen (106) an dem nicht mit dem wenigstens einen Dorn (104) versehenen Bauteil ausgebildet sind.

9. Arretierbolzen (10) nach Anspruch 7 oder 8, **dadurch gekennzeichnet, dass** die einander übergreifenden Elemente (102) einen Außenmehrkant (108) an dem Griff (16) oder an dem Hülsenteil (12) und einen korrespondierenden Innenmehrkant (110) an dem nicht mit dem Außenmehrkant (108) versehenen Bauteil umfassen.

10. Arretierbolzen (10; 10a, 10b, 10c) nach einem der Ansprüche 3 bis 9, **dadurch gekennzeichnet, dass** eine zweite Führungseinrichtung (50) vorgesehen ist, die ein Verdrehen des Arretierstifts (14; 14a, 14b, 14c) um die Längsachse (20) relativ zu dem Griff (16) zumindest im Betriebszustand, vorzugsweise auch im Verstellzustand, verhindert.

11. Arretierbolzen (10; 10a, 10b, 10c) nach einem der vorhergehenden Ansprüche, **dadurch gekennzeichnet, dass** in dem Betriebszustand ein Sicherungselement (112) an dem Arretierstift (14; 14a, 14b, 14c) befestigt ist, das zumindest mittelbar, vorzugsweise unmittelbar, an dem zweiten Anschlag (58) mitwirkt.

12. Arretierbolzen (10; 10a, 10b, 10c) nach einem der vorhergehenden Ansprüche, **dadurch gekennzeichnet, dass** die erste Führungseinrichtung (44) eine erste Außenkontur (42) an dem Arretierstift (14; 14a, 14b, 14c) und eine dazu korrespondierende erste Innenkontur (40) an dem Hülsenteil (12; 12a, 12b, 12c) umfasst, bevorzugt wobei die erste Außenkontur (42) und die erste Innenkontur (40) jeweils Mehrkantprofile, besonders bevorzugt Sechskantprofile, sind.

13. Arretierbolzen (10; 10a, 10b, 10c) nach Anspruch 12, **dadurch gekennzeichnet, dass** der Arretierstift (14; 14a, 14b, 14c) von der Spitze (26) aus gesehen jenseits seiner ersten Außenkontur (42) eine Verjüngung (62) aufweist, die gegenüber der ersten Außenkontur (42) so weit zurückgenommen ist, dass sie ein Verdrehen des Arretierstifts (14; 14a, 14b, 14c) gegenüber dem Hülsenteil (12; 12a, 12b, 12c) erlaubt, wenn im Verstellzustand des Arretierbolzens (10; 10a, 10b, 10c) die Verjüngung (62) des Arretierstifts (14; 14a, 14b, 14c) auf axialer Höhe der ersten Innenkontur (40) des Hülsenteils (12) angeordnet wird.

14. Arretierbolzen (10; 10a, 10b, 10c) nach Anspruch 13, **dadurch gekennzeichnet, dass** der Arretierstift (14; 14a, 14b, 14c) von der Spitze (26) aus gesehen jenseits der Verjüngung (62) eine zweite Außenkontur (52) aufweist, die zu der ersten Außenkontur (42) identisch ist.

15. Arretierbolzen (10; 10a, 10b, 10c) nach einem der vorhergehenden Ansprüche, **dadurch gekennzeichnet, dass** der Arretierstift (14; 14a, 14b, 14c) an der Spitze (26) eine einseitige Abschrägung (28) aufweist.

## Claims

1. Indexing plunger (10; 10a, 10b, 10c) comprising a sleeve part (12; 12a, 12b, 12c) and an indexing pin (14; 14a, 14b, 14c), it being possible, in an operating state of the indexing plunger (10; 10a, 10b, 10c), to move the indexing pin (14; 14a, 14b, 14c) relative to the sleeve part (12; 12a, 12b, 12c) along a longitudinal axis (20) between a maximum extended position, which is defined by a first stop (56), and a maximum retracted position, which is defined by a second stop (58),
and a first guide device (44) being provided which allows the indexing pin (14; 14a, 14b, 14c) to be oriented with respect to the sleeve part (12; 12a, 12b, 12c) in at least two different rotational positions with respect to the longitudinal axis (20),
the indexing pin (14; 14a, 14b, 14c) comprising, on the end region thereof that faces away from a grip (16) of the indexing plunger (10; 10a, 10b, 10c), a tip (26) that does not have continuous rotational symmetry or discrete rotational symmetry with respect to the longitudinal axis (20), and it being possible, in an adjustment state of the indexing plunger (10; 10a, 10b, 10c), to move the indexing pin (14; 14a, 14b, 14c) into any of the different rotational positions with respect to the sleeve part (12; 12a, 12b, 12c),
**characterized in that**
- in the operating state of the indexing plunger (10; 10a, 10b, 10c), the first guide device (44) secures a set rotational position of the indexing pin (14; 14a, 14b, 14c) relative to the sleeve part (12; 12a, 12b, 12c) irrespective of the axial position between the maximum extended position and the maximum retracted position in which the indexing pin (14; 14a, 14b, 14c) is located.

2. Indexing plunger (10; 10a, 10b, 10c) according to claim 1, **characterized in that** in the adjustment state, the indexing pin (14; 14a, 14b, 14c) can be moved beyond the maximum retracted position or the maximum extended position of the operating state in the axial direction relative to the sleeve part (12; 12a, 12b, 12c).

3. Indexing plunger (10; 10a, 10b, 10c) according to either claim 1 or claim 2, **characterized in that** the indexing plunger (10; 10a, 10b, 10c) comprises the grip (16) for axially moving the indexing pin (14; 14a, 14b, 14c) relative to the sleeve part (12; 12a, 12b, 12c), **in that** the indexing pin (14; 14a, 14b, 14c) is fixed to the grip (16) in an operating position in the operating state, and **in that** in the adjustment state, the indexing pin (14; 14a, 14b, 14c) is brought into an adjustment position relative to the grip (16) that is different from the operating position.

4. Indexing plunger (10; 10a, 10b, 10c) according to claim 3, **characterized in that**, in contrast to the operating position, in the adjustment position the indexing pin (14; 14a, 14b, 14c) is shifted along the longitudinal axis (20) relative to the grip (16).

5. Indexing plunger (10; 10a, 10b, 10c) according to either claim 3 or claim 4, **characterized in that** the indexing plunger (10; 10a, 10b, 10c) comprises an adjustment element (46) for shifting the indexing pin (14; 14a, 14b, 14c) between the adjustment position and the operating position, the adjustment element (46) in particular comprising a screw (48) that is supported on the grip (16) on the one hand and on the other engages in the indexing pin (14; 14a, 14b, 14c).

6. Indexing plunger (10; 10a, 10b, 10c) according to any of claims 3 to 5, **characterized in that** a detent device (64) is provided between the sleeve part (12; 12a, 12b, 12c) and the grip (16), which device, independently of the first guide device (44), prevents the grip (16) from rotating relative to the sleeve part (12; 12a, 12b, 12c) about the longitudinal axis (20) when the first stop (56) of the indexing plunger (10; 10a, 10b, 10c) is acting.

7. Indexing plunger (10) according to any of claims 3 to 6, **characterized in that** the first guide device (44) comprises elements (102) on the grip (16) and on the sleeve part (12) that overlap along the longitudinal axis (20).

8. Indexing plunger (10) according to claim 7, **characterized in that** the overlapping elements (102) on the grip (16) or on the sleeve part (12) comprise at least one peg (104) that projects along the longitudinal axis (20) and axial bores (106) for engaging the at least one peg (104) that are distributed circumferentially, in particular uniformly distributed, the axial bores (106) being formed on the component that is not provided with the at least one peg (104).

9. Indexing plunger (10) according to either claim 7 or claim 8, **characterized in that** the overlapping elements (102) comprise an outer polygon (108) on the grip (16) or on the sleeve part (12), and a corresponding inner polygon (110) on the component that is not provided with the outer polygon (108).

10. Indexing plunger (10; 10a, 10b, 10c) according to any of claims 3 to 9, **characterized in that** a second guide device (50) is provided which prevents the indexing pin (14; 14a, 14b, 14c) from rotating about the longitudinal axis (20) relative to the grip (16), at least in the operating state, preferably also in the adjustment state.

11. Indexing plunger (10; 10a, 10b, 10c) according to any of the preceding claims, **characterized in that** in the operating state, a securing element (112) is fastened to the indexing pin (14; 14a, 14b, 14c), which element contributes to the second stop (58) at least indirectly, preferably directly.

12. Indexing plunger (10; 10a, 10b, 10c) according to any of the preceding claims, **characterized in that** the first guide device (44) has a first outer contour (42) on the indexing pin (14; 14a, 14b, 14c) and a first inner contour (40) on the sleeve part (12; 12a, 12b, 12c), which inner contour corresponds to the first outer contour, the first outer contour (42) and the first inner contour (40) each preferably being polygonal profiles, particularly preferably hexagonal profiles.

13. Indexing plunger (10; 10a, 10b, 10c) according to claim 12, **characterized in that** when seen from the tip (26), the indexing pin (14; 14a, 14b, 14c) comprises a taper (62) beyond the first outer contour (42) thereof that is so far withdrawn relative to the first outer contour (42) that it allows the indexing pin (14; 14a, 14b, 14c) to rotate relative to the sleeve part (12; 12a, 12b, 12c) when the taper (62) of the indexing pin (14; 14a, 14b, 14c) is arranged at the axial height of the first inner contour (40) of the sleeve part (12) in the adjustment state of the indexing plunger (10; 10a, 10b, 10c).

14. Indexing plunger (10; 10a, 10b, 10c) according to claim 13, **characterized in that** when seen from the tip (26), the indexing pin (14; 14a, 14b, 14c) comprises a second outer contour (52) beyond the taper (62), which contour is identical to the first outer contour (42).

15. Indexing plunger (10; 10a, 10b, 10c) according to any of the preceding claims, **characterized in that** the indexing pin (14; 14a, 14b, 14c) has a one-sided bevel (28) on the tip (26).

## Revendications

1. Boulon de blocage (10; 10a, 10b, 10c) comprenant une partie (12 ; 12a, 12b, 12c) formant douille et une broche de blocage (14 ; 14a, 14b, 14c),
sachant que, lorsque ledit boulon de blocage (10 ; 10a, 10b, 10c) se trouve dans un état de fonctionnement, ladite broche de blocage (14 ; 14a, 14b, 14c) peut être déplacée par rapport à ladite partie (12 ; 12a, 12b, 12c) formant douille, le long d'un axe longitudinal (20), entre une position de désengagement maximal, définie par une première butée (56), et une position d'engagement maximal définie par une seconde butée (58), et
sachant qu'il est prévu un premier dispositif de guidage (44) permettant une orientation de ladite broche de blocage (14; 14a, 14b, 14c), par rapport à ladite partie (12 ; 12a, 12b, 12c) formant douille, en au moins deux emplacements différents pris par rotation vis-à-vis dudit axe longitudinal (20),
sachant que ladite broche de blocage (14 ; 14a, 14b, 14c) est munie, au niveau de sa région extrême tournée à l'opposé d'une poignée (16) dudit boulon de blocage (10 10a, 10b, 10c), d'une pointe (26) dépourvue de symétrie de révolution et dépourvue de symétrie en rotation vis-à-vis dudit axe longitudinal (20), et sachant que, lorsque ledit boulon de blocage (10; 10a, 10b, 10c) se trouve dans un état de réglage, ladite broche de blocage (14 ; 14a, 14b, 14c) peut être transférée, par rapport à ladite partie (12 ; 12a, 12b, 12c) formant douille, vers l'un quelconque desdits emplacements différents pris par rotation,
**caractérisé par le fait**
- **que**, lorsque le boulon de blocage (10 ; 10a, 10b, 10c) se trouve dans un état de fonctionnement, le premier dispositif de guidage (44) arrête un emplacement réglé de la broche de blocage (14 ; 14a, 14b, 14c), pris par rotation vis-à-vis de la partie (12; 12a, 12b, 12c) formant douille, indépendamment de l'emplacement axial occupé par ladite broche de blocage (14 ; 14a, 14b, 14c) entre la position de désengagement maximal et la position d'engagement maximal.

2. Boulon de blocage (10; 10a, 10b, 10c) selon la revendication 1, **caractérisé par le fait qu'**à l'état de réglage, la broche de blocage (14; 14a, 14b, 14c) peut être déplacée dans la direction axiale, par rapport à la partie (12 ; 12a, 12b, 12c) formant douille, au-delà de la position d'engagement maximal ou de la position de désengagement maximal de l'état de fonctionnement.

3. Boulon de blocage (10 ; 10a, 10b, 10c) selon la revendication 1 ou 2, **caractérisé par le fait**
**que** ledit boulon de blocage (10; 10a, 10b, 10c) comprend la poignée (16) dévolue au déplacement axial de la broche de blocage (14; 14a, 14b, 14c), par rapport à la partie (12; 12a, 12b, 12c) formant douille ;
par le fait qu'à l'état de fonctionnement, ladite broche de blocage (14 ; 14a, 14b, 14c) est consignée à demeure sur ladite poignée (16), en un emplacement opérant ; et
par le fait qu'à l'état de réglage, ladite broche de blocage (14 ; 14a, 14b, 14c) est transposée, par rapport à ladite poignée (16), à un emplacement de réglage différant dudit emplacement opérant.

4. Boulon de blocage (10 ; 10a, 10b, 10c) selon la revendication 3, **caractérisé par le fait qu'**à l'emplacement de réglage, la broche de blocage (14 ; 14a, 14b, 14c) est déplacée, par rapport à la poignée (16), le long de l'axe longitudinal (20) comparativement à l'emplacement opérant.

5. Boulon de blocage (10; 10a, 10b, 10c) selon la revendication 3 ou 4, **caractérisé par le fait que** ledit boulon de blocage (10; 10a, 10b, 10c) comprend un élément d'ajustement (46) affecté au déplacement de la broche de blocage (14; 14a, 14b, 14c) entre l'emplacement de réglage et l'emplacement opérant,
ledit élément d'ajustement (46) étant notamment pourvu d'une vis (48) qui, d'une part, prend appui sur la poignée (16) et qui pénètre, d'autre part, dans ladite broche de blocage (14; 14a, 14b, 14c).

6. Boulon de blocage (10 ; 10a, 10b, 10c) selon l'une des revendications 3 à 5, **caractérisé par le fait qu'**un dispositif de crantage (64), prévu entre la partie (12; 12a, 12b, 12c) formant douille et la poignée (16), interdit une rotation de ladite poignée (16) par rapport à ladite la partie (12; 12a, 12b, 12c) formant douille autour de l'axe longitudinal (20), indépendamment du premier dispositif de guidage (44), lorsque la première butée (56) dudit boulon de blocage (10 ; 10a, 10b, 10c) est active.

7. Boulon de blocage (10) selon l'une des revendications 3 à 6, **caractérisé par le fait que** le premier dispositif de guidage (44) comprend, sur la poignée (16) et sur la partie (12) formant douille, des éléments (102) se chevauchant les uns les autres le long de l'axe longitudinal (20).

8. Boulon de blocage (10) selon la revendication 7, **caractérisé par le fait que** les éléments (102), se chevauchant les uns les autres sur la poignée (16) ou sur la partie (12) formant douille, sont munis d'au moins un ardillon (104) faisant saillie le long de l'axe longitudinal (20), et de perçages axiaux (106) répartis sur le pourtour, notamment répartis de manière uniforme en vue de la pénétration dudit ardillon (104) à présence minimale, lesdits perçages axiaux (106) étant pratiqués dans la pièce structurelle ne comportant pas ledit ardillon (104) à présence minimale.

9. Boulon de blocage (10) selon la revendication 7 ou 8, **caractérisé par le fait que** les éléments (102), se chevauchant les uns les autres, comprennent une configuration polygonale extérieure (108), sur la poignée (16) ou sur la partie (12) formant douille, et une configuration polygonale intérieure concordante (110) sur la pièce structurelle non pourvue de ladite configuration polygonale extérieure (108).

10. Boulon de blocage (10 ; 10a, 10b, 10c) selon l'une des revendications 3 à 9, **caractérisé par le fait qu'**il est prévu un second dispositif de guidage (50) interdisant une rotation de la broche de blocage (14; 14a, 14b, 14c) par rapport à la poignée (16) autour de l'axe longitudinal (20), au moins à l'état de fonctionnement, de préférence également à l'état de réglage.

11. Boulon de blocage (10 10a, 10b, 10c) selon l'une des revendications précédentes, **caractérisé par le fait qu'**à l'état de fonctionnement, un élément d'arrêt (112) fixé à la broche de blocage (14 ; 14a, 14b, 14c) exerce conjointement une action, au niveau de la seconde butée (58), au moins indirectement et de préférence directement.

12. Boulon de blocage (10; 10a, 10b, 10c) selon l'une des revendications précédentes, **caractérisé par le fait que** le premier dispositif de guidage (44) comprend un premier profil extérieur (42) sur la broche de blocage (14; 14a, 14b, 14c) et un premier profil intérieur concordant (40), sur la partie (12; 12a, 12b, 12c) formant douille, sachant notamment que ledit premier profil extérieur (42) et ledit premier profil intérieur (40) se présentent à chaque fois comme des profils polygonaux, comme des profils hexagonaux avec préférence particulière.

13. Boulon de blocage (10; 10a, 10b, 10c) selon la revendication 12, **caractérisé par le fait que** la broche de blocage (14 ; 14a, 14b, 14c) est pourvue, au-delà de son premier profil extérieur (42) en considérant à partir de la pointe (26), d'un resserrement (62) présentant, par rapport audit premier profil extérieur (42), un retrait propre à autoriser une rotation de ladite broche de blocage (14 ; 14a, 14b, 14c), vis-à-vis de la partie (12; 12a, 12b, 12c) formant douille, lorsque ledit resserrement (62) de ladite broche de blocage (14; 14a, 14b, 14c) est positionné, à l'état de réglage dudit boulon de blocage (10 ; 10a, 10b, 10c), sur la hauteur axiale du premier profil intérieur (40) de ladite partie (12) formant douille.

14. Boulon de blocage (10; 10a, 10b, 10c) selon la revendication 13, **caractérisé par le fait que** la broche de blocage (14 ; 14a, 14b, 14c) est dotée, au-delà du resserrement (62) en considérant à partir de la pointe (26), d'un second profil extérieur (52) identique au premier profil extérieur (42).

15. Boulon de blocage (10 10a, 10b, 10c) selon l'une des revendications précédentes, **caractérisé par le fait que** la broche de blocage (14 ; 14a, 14b, 14c) est munie d'un biseau unilatéral (28) au niveau de la pointe (26).
